# EUROPEAN PATENT APPLICATION

(11) **EP 4 844 547 A1**
(43) Date of publication of application: **25.11.2026**
(21) Application number: 26174453.6
(22) Date of filing: 24.04.2026
(51) Int. Cl.: G06F 3/041

(54) **TOUCHPAD WITH DYNAMIC TOUCH ZONES, TOUCH ORIGIN DETECTION, MULTI-CLASSIFICATION, AND ADAPTIVE LEARNING**

(30) Priority: 14.05.2025 US 202519208074
(71) Applicant: Microsoft Technology Licensing, LLC, Redmond, WA 98052 (US)
(72) Inventor: ZAGIEL, Lior, Redmond, 98052 (US); MENASHOF, Roei Shlomo, Redmond, 98052 (US); ISTRIN, Oren, Redmond, 98052 (US)
(74) Representative: CMS Cameron McKenna Nabarro Olswang LLP

(57) **Abstract**

A touchpad dynamically adjusts touch zones and scrutinizes touch events based on touch zone origin and/or other touch characteristics. Touch events undergo multiple classifications using different frame datasets. For example, a touch event originating in an active (e.g., central) zone of the touchpad can be classified as intentional touch by a single frame classifier while a touch originating in an inactive zone can be further evaluated by a motion classifier considering multiple data frames before determining the touch classification. Touch events originating in an inactive zone can result in expansion of the inactive zone while touch events originating in an active zone can result in contraction of one or more inactive zones. Classification and zoning logic are customizable based on learned user behaviors, thereby improving touch classification and touch zone accuracy for user touch events.

## Description

### BACKGROUND

Computing devices often utilize touch input devices, such as touchscreens and touchpads, which are touch-sensitive surfaces that allow users to control the computing devices using their fingers. For example, a touchscreen display on a phone, tablet, or notebook computer allows a user to interact with displayed content by touching a display screen or pad of the touchscreen. A touchpad is often utilized in portable computers as an integrated mouse (e.g., moving a cursor by touching and sliding a finger on the touchpad) but can also be used to provide additional forms of input. A touchpad can have integrated buttons a user can press or click and/or that can be configured to recognize selections based on gestures, such as tapping a finger on the touchpad once to perform a "select" and tap twice to perform an "open" (which mimics the pressing or double-clicking of a button). Other recognized gestures for touchscreens and touchpads include, for example, sliding or dragging a finger to move a cursor, pinching two fingers to zoom in, separating two fingers to zoom out, swiping to scroll, to switch between applications, etc.

Touchpads include mechanical touchpads and haptic touchpads. A mechanical touchpad has one or more buttons a user can click (e.g., by hand or by instrument) while a haptic touchpad mimics a click (e.g., by hand or by instrument). Touchpads often include a microcontroller (e.g., a system on a chip (SoC)) configured to process touch input data received by touch sensors. The microcontroller reports the touch inputs to the operating system or application, which generates feedback. For example, the OS or application can generate displayable content showing user input, such as cursor movements, selections, drawings, etc., while the user interacts with displayed content using a touchpad.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A touchpad with dynamic touch zones, touch origin detection, multi-classification, and adaptive learning is disclosed herein. Active touch zones and inactive touch zones (e.g., evaluation zones, dead zones, or delay zones) of the touchpad are dynamically adjusted in response to touch events to filter out unintentional contact and misinterpretations of user intent. Such dynamic adjustments are adapted to learned behaviors. Touch classification is assisted by touch-origin detection (e.g., starting inside or outside dead zone) to distinguish between intentional finger touches and unintentional palm contacts. Palm rejection is improved while maintaining responsiveness to intentional interaction by classifying touch events based on single frames and across multiple frames. For example, a touch event originating in an active (e.g., central) zone of the touchpad can be classified as intentional touch by a single frame classifier while a touch originating in a dead zone can be further evaluated by the motion classifier before determining the touch classification. Touch characteristics of still-frames (e.g., picture) and motion frames (e.g., video) include touch origin, direction, velocity, size, duration, and pressure. Accuracy is improved over time by adaptive algorithms that learn user behavior. Logic that determines touch classifications and touch zones is dynamically modified to adapt to user behavior. For example, resting a palm on the touchpad while moving the thumb can be learned as a multi-touch event where the user intends to simultaneously create non-user input (e.g., palm) and user input (e.g., thumb).

In an aspect, a computing device comprises a touch device (e.g., touchpad). The device includes touch and pressure sensors configured to detect touch events, touch location, and applied force. The device includes a data generator configured with a data collector configured to collect sensor data and a feature extractor/preprocessor configured to filter and normalize sensor data and generate a dataset for each frame of a touch event. The device includes a first classifier configured to generate a first classification (e.g., input, non-input) based on a first set of datasets representing a first set of frames (e.g., a single frame) of the touch event. The device includes a second classifier configured to generate a second classification based on a second set of datasets representing a second set of frames (e.g., a tunable number of multiple frames) of the touch event. In some examples, the second classification can also be based on the first classification. The device includes a determiner configured to determine a final classification of the touch event (e.g., as input/intentional touch or non-input/unintentional touch) and/or to adapt a touch zone of the touchpad based at least on one of the first classification or the second classification. The determination can be based on a touch point of origin for the touch event (e.g., in an active or inactive touch zone). The device can include an adapter configured to learn user behavior based at least on touch events (e.g., and user responses to misinterpretations). The adapter can change the determiner to determine the final classification and/or the touch zone adaptation differently based on the learned user behavior.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of an example computing device with a capacitive touch interface implementing adaptive calibration of a haptic touchpad, in accordance with an embodiment.
FIG. 2 shows a block diagram of an example of a touch manager configured to enable dynamic touch zones, touch origin detection, multi-classification, and adaptive learning, in accordance with an embodiment.
FIG. 3 shows a block diagram of an example of a distributed implementation of a touch manager configured to provide dynamic touch zones, touch origin detection, multi-classification, and adaptive learning, in accordance with an embodiment.
FIG. 4 shows a block diagram of an example of a touchpad configured to provide dynamic touch zones, touch origin detection, multi-classification, and adaptive learning, in accordance with an embodiment.
FIG. 5 shows a flowchart for an example process for providing a touchpad with dynamic touch zones, touch origin detection, multi-classification, and adaptive learning, in accordance with an embodiment.
FIG. 6 shows a flowchart for an example process for providing a touchpad with dynamic touch zones, touch origin detection, multi-classification, and adaptive learning, in accordance with an embodiment.
FIG. 7 shows a block diagram of an example computer system in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments

Computing devices often utilize touch input devices, such as touchscreens and touchpads, which are touch-sensitive surfaces that allow users to control the computing devices using their fingers. For example, a touchscreen display on a phone, tablet, or notebook computer allows a user to interact with displayed content by touching a display screen or pad. A touchpad is often utilized in portable computers as an integrated mouse (e.g., moving a cursor by touching and sliding a finger on the touchpad) but can also be used to provide additional forms of input. A touchpad can have integrated buttons a user can press or click and/or that can be configured to recognize selections based on gestures, such as tapping a finger on the touchpad once to perform a "select" and tap twice to perform an "open" (which mimics the pressing or double-clicking of a button). Other recognized gestures for touchscreens and touchpads include, for example, sliding or dragging a finger to move a cursor, pinching two fingers to zoom in, separating two fingers to zoom out, swiping to scroll, to switch between applications, etc.

Touchpads include mechanical touchpads and haptic touchpads. A mechanical touchpad has one or more buttons a user can click (e.g., by hand or by instrument) while a haptic touchpad mimics a click (e.g., by hand or by instrument). Touchpads often include a microcontroller (e.g., a system on a chip (SoC)) configured to process touch input data received by touch sensors. The microcontroller reports the touch inputs to the operating system or application, which generates feedback. For example, the OS or application can generate displayable content showing user input, such as cursor movements, selections, drawings, etc., while the user interacts with displayed content using a touchpad.

Touchpad users provided intended inputs and unintended inputs, such as when their palms inadvertently contact the touchpad surface during typing or natural hand movements. These unintended inputs (e.g., accidental touches) can cause erratic cursor movements, unintended clicks, and overall disruption of the user experience because touchpads are sometimes unable to distinguish between user input (i.e., intended user input) and non-user input (e.g., unintended input). Non-user input includes palm touches and moisture, for example. While a palm touch can be rejected based on a touch input size larger than a finger, palm touches on capacitive touchscreens may show up as multiple smaller touches similar to the size of finger touches, such as due to a loss of grounding and/or based on the shape of the palm and amount of contact at the time of touch.

Inaccurate determinations of non-user input as user input and vice versa can lead to erratic device behavior (e.g., erroneously changing cursor location, which results in text or other operations being entered in the wrong place before a user notices the error), user frustration, user interruptions and delays to re-enter user input and/or to correct errant operations based on misinterpretations of user input, as well as excess consumption of energy (e.g., battery depletion) involved in inaccurate reporting and processing of non-user input as if it were intended user input in addition to erroneous operations and undo operations related to inaccurate determinations of user input.

In an attempt to improve the accuracy of touch detections, a static (e.g., fixed) palm rejection algorithm can be used. A user can learn how the static algorithm works, causing the user to adapt the way the user interacts with the touchpad to satisfy the static algorithm to avoid misinterpreting palm input as intended input. Alternatively, users can resort to disabling a touchpad altogether while typing to avoid misinterpretations of input by the touchpad. Neither alternative is "user friendly." Both alternatives hinder productivity.

The novel technology described herein overcomes these and further deficiencies of the art. In particular, A touchpad with dynamic touch zones, touch origin detection, multi-classification, and adaptive learning is disclosed herein. Active touch zones and inactive touch zones (e.g., evaluation zones, dead zones, or delay zones) are dynamically adjusted in response to touch events to filter out unintentional contact and misinterpretations of user intent. Dynamic adjustments are adapted to learned behaviors. Touch classification is assisted by touch-origin detection (e.g., starting inside or outside dead zone) to distinguish between intentional finger touches and unintentional palm contacts. Palm rejection is improved while maintaining responsiveness to intentional interaction by classifying touch events based on single frames and across multiple frames. For example, a touch event originating in an active (e.g., central) zone of the touchpad can be classified as intentional touch by a single frame classifier while a touch originating in a dead zone can be further evaluated by the motion classifier before determining the touch classification. Touch characteristics of still-frames (e.g., picture) and motion frames (e.g., video) include touch origin, direction, velocity, size, duration, and pressure. Accuracy is improved over time by adaptive algorithms that learn user behavior. Logic that determines touch classifications and touch zones is dynamically modified to adapt to user behavior. For example, resting a palm on the touchpad while moving the thumb can be learned as a multi-touch event where the user intends to simultaneously create non-user input (e.g., palm) and user input (e.g., thumb).

In an aspect, a computing device comprises a touch device (e.g., touchpad). The device includes touch and pressure sensors configured to detect touch events, touch location, and applied force. The device includes a data generator configured with a data collector configured to collect sensor data and a feature extractor/preprocessor configured to filter and normalize sensor data and generate a dataset for each frame of a touch event. The device includes a first classifier configured to generate a first classification (e.g., input, non-input) based on a first set of datasets representing a first set of frames (e.g., a single frame) of the touch event. The device includes a second classifier configured to generate a second classification based on a second set of datasets representing a second set of frames (e.g., a tunable number of multiple frames) of the touch event. In some examples, the second classification can also be based on the first classification. The device may include further classifiers for determining classifications based on single and/or multiple frames. By using multiple classifiers to generate multiple classifications, increasingly more accurate classifications can be determined based on the multiple classification aspects being accumulated together to generate an overall classification score, thereby improving the user experience. Furthermore, while some classifiers can accurately make a determination based on a single frame (e.g., a frame capturing a finger touch position), other classifiers may advantageously make use of multiple frames (e.g., multiple frames showing touch motion) for improved classification accuracy and user experience. The device includes a determiner configured to determine a final classification of the touch event (e.g., as input/intentional touch or non-input/unintentional touch) and/or to adapt a touch zone of the touchpad based at least on one of the first classification or the second classification. The determination can be based on a touch point of origin for the touch event (e.g., in an active or inactive touch zone). The device can include an adapter configured to learn user behavior based at least on touch events (e.g., and user responses to misinterpretations). The adapter can change the determiner to determine the final classification and/or the touch zone adaptation differently based on the learned user behavior. Changing the determiner based on learned user behavior enables the final classification to be generated based more strictly upon relevant touch events, where the weight of touch events in the determination that are interpretable based on the learned user behavior as not intended by the user can be decreased or removed from the determination entirely, which improves classification accuracy.

Advantages or benefits of the embodiments described further herein include more accurate classification of touch data as user input and more accurate rejection of non-user input (e.g., user palm touch, moisture). Energy is conserved by avoiding reporting and processing non-user input. User-experience is improved by improved accuracy is identification of user input. Users can interact with touch devices more naturally without contorting their hands or limiting where they start touching a touchpad because user-input is identified more accurately, and non-user input is rejected more accurately. Improving touch detection accuracy reduces the number of erroneous reports from the digitizer to the OS, which avoids unnecessary processing of erroneous reports, avoids erroneous responses, and avoids subsequent undo operations, thereby conserving energy (e.g., battery life for portable devices).

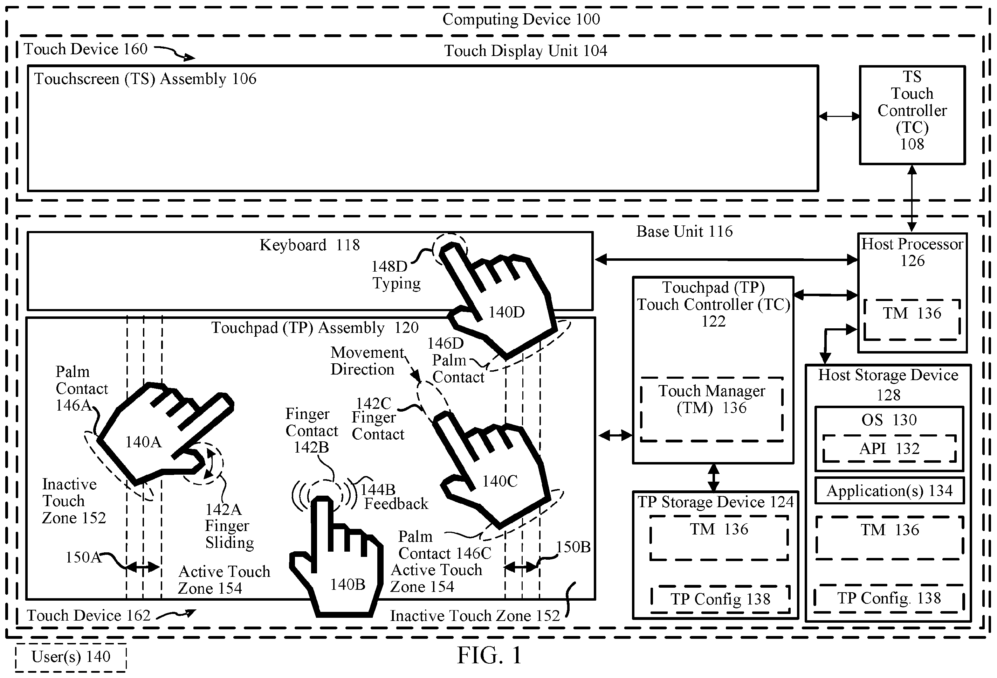

Embodiments disclosed herein can be configured in various ways. For instance, FIG. 1 shows a block diagram of an example computing device 100 with a capacitive touch interface implementing adaptive calibration of a haptic touchpad, in accordance with an embodiment. As shown in FIG. 1, computing device 100 includes a touch display unit 104 and a base unit 116. Touch display unit 104 includes a touch device 160 and a touchscreen (TS) touch controller (TC) 108. Touch device 160 includes a touch screen formed at least of a TS assembly 106 that includes a touch sensor array and a display panel. Base unit 116 includes a keyboard 118, a touch device 162, a touchpad (TP) touch controller (TC) 122, a TP storage device 124, a host processor 126, and a host storage device 128. Touch device 162 includes a touchpad formed at least of a touchpad (TP) assembly 120 that includes a touch sensor array and force sensor array. TP TC 122 includes (e.g., executes) a touch manager 136. TP storage device 124 stores a touch manager 136 and a touchpad configuration (TP config) 138. Host processor 126 includes (e.g., executes) a touch manager 136. Host storage device 128 stores an operating system 130, one or more applications 134, a touch manager 136, and a touchpad configuration 138. The components of computing device 100 are described in further detail as follows.

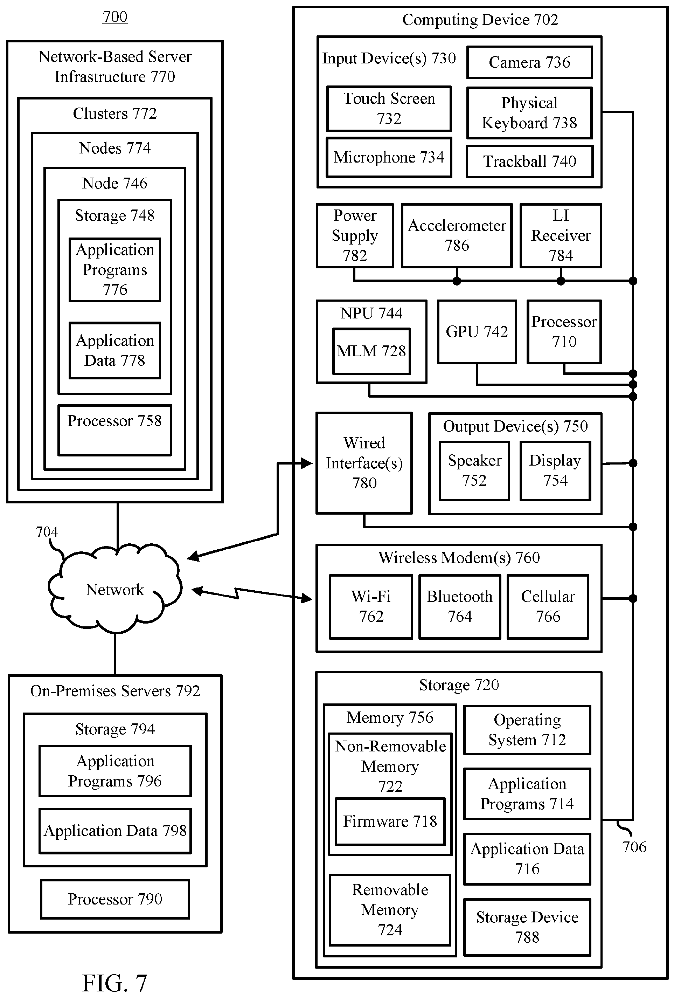

Computing device 100 may be any type of stationary or mobile computing device with a touch input device, including a mobile computer or mobile computing device (e.g., a 2-in-1 device, such as a Microsoft^{®} Surface^{®} device, a personal digital assistant (PDA), a laptop computer, a notebook computer, a tablet computer such as an Apple iPad^{™}, a netbook, etc.), a mobile phone, a wearable computing device, or other type of mobile device, or a stationary computing device such as a desktop computer or PC (personal computer), or a server, with at least one touch input device. Example computing device 100 presents one of many possible examples of computing devices. Another example computing device with example features is presented in FIG. 7.

As shown in FIG. 1, computing device 100 (e.g., as shown) may comprise a repositionable notebook computer, a laptop computer, a 2-in-1 computer, a tablet with a case/cover (e.g., with a wired or wireless input device in the case/cover), etc. Computing device 100 includes a touch display unit 104 and a base unit 116. For example, touch display unit 104 (e.g., in an upper/lid portion of computing device 100) and base unit 116 may be physically connected (e.g., by a rotating connector or hinge, a separable connector) and may implement wired communication, or may be physically separate and implement wireless communication (e.g., by a Bluetooth connection). Other computing devices may have the same, similar, or different configuration of touch input devices, with or without other input devices. These components of computing device 100 are described in further detail as follows.

As described herein, a touch device can be any type of touch device, e.g., touchscreen, touchpad, etc. "Touch" is synonymous with "contact," regardless of what makes contact with (e.g., touches) a touch device. For example, contact can be made with a touch device (e.g., the touch device can be touched) by a user's finger, a user's palm, moisture, an active instrument (e.g., pen), a passive instrument, etc. Each contact event (e.g., touch event) can include one or more locations of touch/contact. Each location of contact/touch can be referred to as a contact point or touchpoint. For example, in a single touch event a user can simultaneously touch multiple touchpoints, e.g., by simultaneously touching a touch device with two fingers to make a gesture to zoom in or zoom out or by simultaneously touching the touch device with a pen and the user's palm. A contact can occur for one or more frames of a touch device, which may have x frames per second (e.g., 100 frames/second). A contact can move from a point of origin to another location, e.g., across multiple locations (e.g., sliding finger across touchpad). Touch movement can be nonlinear (e.g., a curve, back and forth). Velocity of movement can be determined from frame data timestamps. Stationary contact (e.g., taps) may be referred to as being static.

Touch display unit 104 includes a touchscreen assembly 106, a touchscreen (TS) and touch controller (TC) 108. Touch display unit 104 may include one or more user input and output devices, such as touchscreen assembly 106. Other examples of computing devices may have the same, similar, and/or other types and configurations of input devices, such as a peripheral touchscreen.

Touchscreen assembly 106 includes a touch input device (e.g., touch sensory array operating as a touch sensitive digitizer), and an output device (e.g., a display panel) among other hardware, firmware and/or software components. The touch digitizer ("digitizer") comprises capacitive touch sensor element grids or arrays. The touch sensor array may occupy any area (e.g., including all) of touchscreen assembly 106 even though not illustrated as such in FIG. 1.

In some examples, touchscreen assembly 106 may comprise, from bottom to top, a display panel, a touchscreen sensor array, and a cover glass that user 140 touches, e.g., with layers of transparent adhesive between the display panel, touchscreen sensor array, and cover glass. The touchscreen sensor array and cover glass may be substantially transparent, or with wires, electrodes, and sensor sufficiently small so as to be unnoticeable to most human vision.

The display panel may be, for example, a liquid crystal display (LCD) or a light emitting diode (LED) display. The display panel may be driven, for example, by a graphics processing unit (GPU) (not shown). User 140 interacts with content displayed by the display panel, for example, by touching touchscreen assembly 106, which is detected by the touch sensor array. Further examples of display and GPU are discussed in FIG. 7.

The touchscreen touch digitizer (e.g., touch sensor array) may comprise, for example, a capacitive type of touch digitizer, e.g., projected capacitance (mutual or self), in-cell, on-cell, out-cell, etc. The touchscreen touch digitizer may be configured to detect touch, for example, via capacitive coupling with an instrument (not shown), a finger, a palm, moisture, etc. in close proximity to touchscreen assembly 106 that results in capacitance at one or more locations of the touch sensor array. The detection pitch or resolution of the touch sensor array may be, for example, fractional to multiple mm.

Touch sensors in the touch sensor array detect locations where touch events occur (e.g., where a user finger, instrument, palm, moisture touch touchscreen assembly 106). Capacitive touchscreens work similarly to capacitive touchpads. Touch sensor(s) utilizing capacitive technology maintain an electrical charge across the touch sensor array. A touch disrupts the charge in the area touched. Locations of contact may be indicated by x, y coordinates on the touch sensor array, which may be mapped to the display panel. Capacitance values across an area of the touch sensor array indicate the size and shape of contact in each (e.g., 10 msec) frame. Comparing capacitance values across frames can indicate change in size, shape, and movement of contact/touch. Depending on the application 134 or OS 130 that user 140 is interacting with, the user's finger movement across the touch sensor array can be translated on the display panel into a selection, a resizing, a drawing, a cursor movement, etc.

Touchscreen (TS) Touch controller (TC) 108 controls at least the touch digitizer of touchscreen assembly 106 (e.g., touch sensor array). TS TC 108 is a microcontroller, which is a computer on a chip (e.g., an integrated circuit), including one or more processors, memory, and programmable inputs/outputs (I/O) configured to implement, e.g., among other functions, the touch interface. TS TC 108 may be configured to process touch sensor data, e.g., periodically. For example, TS TC 108 may be configured to process touch sensor data every x us or msec (e.g., 100 times per second or 10 msec) to provide a touchscreen interface for user 140.

TS TC 108 may be configured to receive and process touch signals detected by a touch sensor array. TS TC 108 may process touch data, e.g., based on a touchscreen configuration (not shown). TS TC 108 may send processed touch signal reports to host processor 126, e.g., for processing relative to OS 130 and/or one or more applications 134 that user 140 may be interacting with via touchscreen assembly 106, e.g., by passive pen contact or finger contact.

TS TC 108 may control modes of operation of touchscreen assembly 106. Touchscreen assembly 106 may have a plurality of touch detection modes, e.g., touch or passive mode, active or pen mode, which may be implemented, at least in part, by TC 108. TC 108 may (e.g., in a touch or passive instrument mode), for example, drive a signal on at least one antenna (e.g. X or Y, row or column, vertical or horizontal portion of a grid) in the touch digitizer portion of touchscreen assembly 106, which may project an electric field over touchscreen assembly 106, and monitor the other antenna/electrode for changes (e.g. caused by a conductive pattern in proximity to touchscreen assembly 106). Signal changes may result in detected signals, each with an associated position and intensity/magnitude. TS TC 108 may (e.g., in an active instrument mode), for example, not drive a signal on an antenna and may (e.g. instead) monitor for (e.g. capacitively coupled) active signals in the touch digitizer portion of touchscreen assembly 106, where each detected signal may have an associated position and intensity/magnitude.

Touchscreen assembly 106 and TS TC 108 may generate positive and negative binary large objects (BLOBs) representative of the area, size, and location of detected touches, which may be accompanied by additional information associated with the BLOBs. The determination of touch inputs may be configured, e.g., by a user, and/or dynamically adapted (e.g., by TS TC 108 and/or host processor 126). For example, touchscreen assembly 106 and TS TC 108 may detect contact based on one or more (e.g., adaptable and/or configurable) sensitivity (e.g., signal intensity) thresholds. In some examples, TS TC 108 may be configured to report touches (e.g., BLOBs) and associated data to OS 130, e.g., executed by host processor 126. In some examples, TS TC 108 may be configured to process touch data to confirm that touch data represents a touch before reporting confirmed touches to OS 130.

Base unit 116 includes a keyboard 118, a touchpad (TP) assembly 120, a TP touch controller (TC) 122, a TP storage device 124, a host processor 126, and a host storage device 128. Base unit 116 may include one or more integrated and/or peripheral user input devices, such as keyboard 118 and touchpad assembly 120. Other examples of computing devices may have the same, similar, and/or other types and configurations of input devices, such as a peripheral touchpad. Note that touchpad and trackpad are used interchangeably herein.

Keyboard 118 is an input device that user 140 can use to provide input to computing device 100. In some examples, one or more keys may be programmed to customize operation of TM 136 (e.g., for a particular application or user) for touchpad assembly 120.

Touchpad assembly 120 includes a touchpad touch digitizer ("digitizer") (e.g., touch sensor element grids or arrays) among other hardware, firmware, and/or software components. Touchpad assembly 120 provides a touch input device (e.g., touch sensitive digitizer with a touch sensor array and force sensor array). Touchpad assembly 120 may include a haptic feedback mechanism via one or more haptic actuators. Touchpad assembly 120 is an input device that user 140 can use to provide a variety of inputs to computing device 100, such as controlling a cursor, making selections, drawing, zooming in or out, etc. An example touchpad in a notebook computer (e.g., touchpad assembly 120) may be, for example, approximately 90 mm x 150 mm (3-1/2 inches x 6 inches). In some examples (e.g., as shown in FIG. 1), touchpad assembly 120 may comprise, from bottom to top, one or more haptic actuators, a force sensor array, a touch sensor array, and a cover material that user 140 touches. The one or more haptic actuators provide feedback to users, such as a simulation of a mechanical button press or mouse click when user 140 taps TP assembly 120 with a finger or instrument.

The touchpad touch digitizer (e.g., touch sensor array and force sensor array) may comprise any type of touch digitizer, e.g., projected capacitance (mutual or self), in-cell, on-cell, out-cell, etc. The touchpad touch digitizer (e.g., touch sensor array and force sensor) may be configured to detect touch, for example, via capacitive coupling with an instrument, a finger, a palm, moisture, etc. in close proximity to touchpad assembly 120 that results in capacitance at one or more locations of the touch sensor array and force sensor array. The detection pitch or resolution of the touch sensor array may be, for example, fractional to multiple mm.

Touch sensors in the touch sensor array detect locations (e.g., touchpoints) where user 140 touches touchpad assembly 120. A capacitive touch sensor array may work similarly to capacitive touch sensor array. Touch sensor(s) utilizing capacitive technology may maintain an electrical charge across a touch sensor array. A touch disrupts the charge in the area touched. Locations of connections may be indicated by x, y coordinates on the touch sensor array, which may be mapped (e.g., with a starting location of the x,y location of user's finger or instrument on TP assembly 120) to the display panel in TS assembly 106 to provide visual feedback of user operations. Capacitance values across an area of the touch sensor array will indicate the size and shape of contact in each (e.g., 10 msec) frame. Comparing capacitance values across frames can indicate change in size, shape, and movement of contact/touch. Depending on the application 134 or OS 130 that user 140 is interacting with, the user's finger movement across the touch sensor array can be translated on the display panel into a selection, a resizing, a drawing, a cursor movement, etc.

A force sensor array includes one or more force sensors (e.g., pressure sensors). For example, a force sensor array may include six force sensors. Force sensors detect the force applied by user 140 (e.g., by finger, palm, instrument) during a touch event. In some examples, a force sensor array can be integrated with the touch sensor array. Thus, in various implementations, force sensors can be integrated with touch sensors or may comprise discrete pressure sensors. Different levels of force applied by a user are reflected (e.g., measured) in the differences between signals (e.g., signal magnitudes) generated by pressure sensor(s). The relationship between applied force and force sensor signal can be linear or nonlinear (e.g., exponential). In some examples, force sensors may comprise opposing conductive materials (e.g., pads) separated by a compressive material, where application of force to TP assembly 120 compresses the compressive material, thereby changing the distance between the plates, which results in detectable signals indicating the applied pressure.

Touchpad (TP) touch controller (TC) 122 (e.g., a programmed processor executing all or part of touch manager (TM) 136) controls at least the touch digitizer of touchpad assembly 120 (e.g., touch sensor array and force sensor array). TP TC 122 is a microcontroller, which is a computer on a chip (e.g., an integrated circuit), including one or more processors, memory, and programmable inputs/outputs (I/O) configured to implement, e.g., among other functions, touch-sensing touchpad interface, e.g., by executing all or part of TM 136. TP TC 122 may be configured to process touch sensor data and force sensor data, e.g., periodically. For example, TP TC 122 may be configured to process touch sensor data and force sensor data every x us or msec (e.g., 100 times per second or 10 msec) to provide a touchpad interface for user 140.

TP TC 122 may be configured to receive and process touch signals generated by touch sensors in the touch sensor array and force signals generated by force sensors in the force sensor array. The number of touch sensors in the touch sensor array may be (e.g., significantly) different from the number of force sensors in the force sensor array. TP TC 122 may process touch data and force data based on TM 136, which may be configured by touchpad configuration 138. TP TC 122 may execute all or a portion of TM 136. TP TC 122 may send processed touch event signal reports to host processor 126, e.g., for processing relative to OS 130 and/or one or more applications that user 140 may be interacting with via touchpad assembly 120, e.g., by finger contact 142. Reports may include touch sensor data and force sensor data.

TP TC 122 may control modes of operation of touchpad assembly 120. Touchpad assembly 120 may have a plurality of touch detection modes, e.g., touch or passive mode, active or pen mode, which may be implemented, at least in part, by TP TC 122. TP TC 122 may (e.g., in a touch or passive instrument mode), for example, drive a signal on at least one antenna (e.g. X or Y, row or column, vertical or horizontal portion of a grid) in the touch digitizer portion of touchpad assembly 120 (e.g., the touch sensor array and the force sensor array), which may project an electric field over touchpad assembly 120, and monitor the other antenna/electrode for changes (e.g. caused by a conductive pattern in proximity to touchpad assembly 120). Signal changes may result in detected signals, each with an associated position and intensity/magnitude. TP TC 120 may (e.g., in an active instrument mode), for example, not drive a signal on an antenna and may (e.g. instead) monitor for (e.g. capacitively coupled) active signals in the touch digitizer portion of touchscreen assembly 120 (e.g., the touch sensor array and the force sensor array). Each signal may have an associated position and intensity/magnitude for a set of touch sensors in the touch sensor array and a set of force sensors in the force sensor array. A "set" may include zero or more sensors.

Touchpad assembly 120 and TP TC 122 may generate positive and negative BLOBs representative of the area, size, and location of detected touches, which may be accompanied by additional data (e.g., applied force data) associated with the BLOBs. The determination of touch inputs (e.g., and associated data) may be configured, e.g., by a user, and/or dynamically adapted (e.g., by TM 136 executed by TP TC 122 and/or host processor 126). For example, touchpad assembly 120 and TP TC 122 may detect touch or force based on one or more (e.g., adaptable and/or configurable) sensitivity (e.g., signal intensity) thresholds (e.g., stored in touchpad configuration 138). In some examples, TP TC 122 may be configured to report touches (e.g., BLOBs) with associated data (e.g., force data) to OS 130, e.g., executed by host processor 126. In some examples, TP TC 122 may be configured to process touch data and force data to confirm that touch data represents a touch before reporting confirmed touches to OS 130.

TP storage device 124 may store TM 136 and touchpad configuration 138 used by TM 136. TP TC 122 may load and execute executable instructions in TM 136, as may be configured by touchpad configuration 138. TP storage device 124 may comprise any of one or more types of memory, e.g., non-removable memory, removable memory, random access memory (RAM), read only memory (ROM), flash memory, a solid-state drive (SSD), a hard disk drive (e.g., a disk drive for reading from and writing to a hard disk), and/or other physical memory device types.

TM 136 can include a data collector and data generator of touch event data for each frame of a touch event. The raw data includes touch sensor data and force sensor data (e.g., indicating applied force) generated by one or more touch sensors in the touch sensor array and force sensors in the force sensor array. The data generator can generate data (e.g., features) from the raw data, e.g., based on calculations. TM 136 can include a preprocessing module configured to filter and normalize touch and force sensor data before the classifiers classify one or more frame datasets for the touch event.

TM 136 (e.g., executed by TS TC 108) can be configured to control sampling of the touch sensor array and the force sensor array. TM 136 controls processing of the samples to classify any contact (e.g., touch events) in the samples according to classes in a set of classifications. General classes may include, for example, user input and non-input. Specific classes may include, for example, finger, palm, instrument, moisture, etc. TM 136 implements touch profiling and classification (e.g., machine learning (ML) classification) of touch events, for example, by extracting and processing (e.g., analyzing) contact/touch features (e.g., characteristics, parameters), such as contact shape, area, capacitive intensity, contact dynamics (e.g., change in size, change in shape, movement over multiple frames, velocity of movement), temporal characteristics (e.g., touch duration), palm indication, spatial clustering, applied force, multi-touch patterns, etc., which may be combined with adaptive/customized profiling and/or adaptive/customized classification (e.g., adaptive thresholds).

TM 136 includes ML classifiers that classify one or more frame datasets as general or specific classes. For example, a first classifier can classify a touch based on a first set of frame datasets and a second classifier can classify a touch event based on a second set of frame datasets associated with the touch event. The second classifier may also classify a touch event based on the first classification. The first set of frame datasets may include, for example, one or more frame datasets. A single frame dataset can be referred to as a still, image, or picture dataset. A multi-frame dataset can be referred to as a motion or video dataset. For example, a first classifier can be an image classifier that generates an image classification, and a second classifier can be a motion classifier that receives the image classification and generates a motion classification.

TM 136 includes a determiner that implements final classification logic based on the classifications generated by the ML classifiers. For example, the determiner can be configured to determine a final classification based on an image classification from an image classifier and a motion classification from a motion classifier. The determiner can (e.g., also) be configured to dynamically control one or more touch zones, such as inactive touch zone 152 and active touch zone 154 of TP assembly 120. Inactive touch zone 152 is a first region of the touchpad designated as inactive due to a lack of user interaction. Active touch zone 154, in contrast, is a second region of the touchpad designated at active due to recent and/or expected user interaction. Note that each of inactive and active touch zones 152 and 154 may be continuous or may be formed of multiple non-contiguous regions of the touchpad. Furthermore, each of inactive and active touch zones 152 and 154 may cover any amount of the touchpad, depending on the current configuration. The determiner can control the location(s), size(s), and/or shape(s) of one or more touch areas such as inactive and active touch zones 152 and 154 within touch assembly 120 based on the intermediate classifications, the final classifications, and/or data in one or more frame datasets. TM 136 includes adaptive learning that learns the touch behavior of user(s) 140. The determiner can be adaptive, for example, by adapting logic that determines final classifications of touch events and/or dynamic control of the one or more touch zones on TP assembly 120. The determiner can determine what touch events to report (e.g., to OS 130) and when to report the classifications. TM 136 can include a handler configured to interpret and respond to the final classification of the touch event.

Host processor 126 may execute executable instructions in OS 130, application(s) 134, TM 136, and/or CM 160. Further examples of host processor 126 and host storage device 128 are shown in FIG. 7.

Host storage device 128 may store an operating system (OS) 130, which may include application programming interface (API) 132, application(s) 134, touch manager (TM) 136, and/or touchpad configuration 138 used by TM 136. Host storage device 128 may comprise any of one or more types of memory, e.g., non-removable memory, removable memory, random access memory (RAM), read only memory (ROM), flash memory, a solid-state drive (SSD), a hard disk drive (e.g., a disk drive for reading from and writing to a hard disk), and/or other physical memory device types.

Host processor 126 loads and executes OS 130, which provides overall operation of computing device 100. OS 130 may provide a user interface for user 140 to configure operation of TM 136 (e.g., configure touchpad configuration 138) to process touch events detected by TP assembly 120 and/or to calibrate the force sensor array for one or more users. Additional discussion of OS 130 is provided in discussion of FIG. 7 (e.g., OS 712). Processor 126 may load and execute API 132, which can be configured to support dynamically adapted and/or customized operation of touch-sensing touch detection and processing implemented by application(s) 134 and/or TM 136.

Processor 126 loads and executes application(s) 134, for example, in response to user selection of application(s) 134. Application(s) 134 may include, for example, a word processing program, a spreadsheet program, a game, etc., that user 140 can interact with through TS assembly 106 and/or TP assembly 120. Application(s) 134 may provide a user interface for user 140 to configure operation of TM 136 (e.g., configure touchpad configuration 138) to apply to touch inputs detected by TP assembly 120.

Processor 126 may load and execute some, none, or all of TM 136, for example, during boot up of computing device 100. TM 136 is configured to provide a touch interface in concert with TP assembly 120. In various examples, TM 136 may be implemented in hardware, hardware combined with one or both of software and/or firmware, and/or as program instructions encoded on computer-readable storage media, configured to perform functions and/or operations described herein for a touch interface in association with user interaction with touchpad assembly 120. TM 136 may provide a user interface for user 140 to configure operation of TM 136 (e.g., configure touchpad configuration 138) to apply to touch inputs detected by TP assembly 120.

In various examples, application(s) 134, operating system (OS) 130, virtual machines (VMs) (not shown), etc., may be executed, hosted, and/or stored on computing device 100 or via one or more other computing devices via network(s) (e.g., not shown). Computing device 100 (e.g., via TS TC 108, TP TC 122, and/or host processor 126) executes one or more processes. A process is any type of executable (e.g., binary, program, application) that is being executed by computing device 100 (e.g., via TS TC 108, TP TC 122, host processor 126, and/or the like).

As shown in FIG. 1, user 140 interacts with integrated and/or peripheral input and output devices associated with computing device 100. In various examples, the interactive input devices include one or more touch-sensing touch devices, such as TS assembly 106 and TP assembly 120. User interactions include, for example, touching touchscreen assembly 106, typing on keyboard 118, and touching touchpad assembly 120. User 140 can provide input, for example, by hand (e.g., touch 142) and/or by input device (e.g., instrument/stylus/pen). User input may be reflected in updates to imagery displayed by a display panel in TS assembly 106.

Several examples of user interaction are shown in FIG. 1. A user's hand, represented as 140A, 140B, 140C, and 140D, shows the user 140 making contact of one form or another (e.g., intended user input or unintended user input). Finger contact is shown as 142A, 142B, and 142C. Palm contact is shown as 146A, 146C, and 146D. Typing on keyboard 118 is shown as typing 148D. For example, user 140 may use touchpad assembly 120 for input in response to imagery shown by a display panel in the touchscreen assembly 106 portion of touch display unit 104. Finger contact 142 can results in detection of contact/touch events by the touch sensor array and the force sensor array. The touch events may occur over one or more frames. For example, touch device 162 may generate 100 frames per second (e.g., one frame every 10 msec). Thus, even a relatively fast contact by user 140 will generate contact information over multiple frames, which results in a detectability of motion-related information, such as change in size, shape, and/or movement of contact over multiple frames, velocity of movement, etc. For example, a contact by a finger may be detected to increase in size and then decrease in size as the user approaches, makes contact, and withdraws a finger from touch device 162 to "tap" TP assembly 120. Also shown on TP assembly 120, as the user 140 makes an intentional touch on TP assembly 120, the user 140 may also make an unintentional palm contact/touch 146Anor 146C, which may be detected as one or more dataset frames in one or more single or multi-touch events. For example, the palm touch may be detected as one or more related or distinct touches similar to finger touches rather than as a single large touch more indicative of a palm. The user can also make unintended palm touches on the TP assembly 120 while typing on keyboard 118 (e.g., 146D).

The touch interface implemented by TP assembly 120 and TM 136 can be configured to accurately identify finger touches 142A, 142B, and 142C as user input and to reject palm touches 146A, 146C, and 146D and moisture touch (not shown) as non-user input/unintentional input by evaluating the detected touches based on touch profiles indicated by data/features extracted/generated from touch event data generated by the touch sensor array and force sensor array. The touchpad touch device 162 (e.g., by operation of TM 136) collects/extracts a set of data features from the sensor data for each frame and classifies the detected touch as a user input class (e.g., finger contact/touch 142A, 142B, or 142C) or non-user input class (e.g., palm touch 146A, 146C, or 146D), for example, based on whether the touch profile indicated by the set of touch features for one or more frames) falls within the touch profile of a general class (e.g., user input, non-input) or a specific class, such as a finger touch, active instrument (e.g., pen) touch, passive instrument touch, palm touch, moisture touch or other defined touch classification. Contact/touch features (e.g., characteristics, parameters) may include, for example, timestamp, contact location (e.g., original and subsequent locations), contact shape, area, capacitive intensity, contact dynamics (e.g., change in size, change in shape, movement over multiple frames, velocity of movement), temporal characteristics (e.g., duration of touch), palm indication, spatial clustering, OS and/or application context, applied force, multi-touch pattern, applied force/pressure, etc., which may be combined with adaptive/customized profiling and/or adaptive/customized classification (e.g., adaptive thresholds).

For example, processing of touch event data collected over multiple frames would show the direction of movement of finger contact 142C and palm contact 146C is downward at an angle to the right, mixing intentional contact 142C with unintentional palm contact 146C. Larger contact areas (e.g., touch sizes) with higher force or pressure may indicate palm contact. Timestamps help track motion in touch events. Movement features indicate movement direction, such as inside to outside, outside to inside, upward, downward, etc. Outside to inside movements may indicate accidental palm contact, e.g., while approaching or typing on the keyboard 118. Inside to outside direction of movement may indicate intentional finger touches.

As shown in FIG. 1, finger contact feedback 144B may be provided by haptic feedback associated with TP assembly 120 at locations (e.g., touchpoints) where a confirmed touch event (e.g., touch input) occurred or at another location with reference to a touch event. Feedback may also be visual, for example, on touch display unit 104. For example, a visual effect may be displayed by display panel in TS assembly 106 at the mapped location of finger touch 142.

TM 136 can be centralized or distributed. Executable versions of TM 136 are shown in dashed lines, e.g., stored in TP storage device 124 and/or host storage device 128, and executed in TP TC 122 and/or host processor 126. The dashed lines indicate that operations performed by TM 136 can be centralized or distributed. For example, powerful microcontroller TP TC 122 may be configured to perform most or all operations of TM 136 while less capable microcontroller TP TC 122 may perform little to no operations of TM 136. Instead, host processor 126 may be configured to perform most or all operations of TM 136. For example, TP TC 122 may execute intermediate still and motion classifiers while a portion of host processor 126 may be dedicated to touchpad operations, such as final classification, reporting input classifications to OS 130, user input handling, adaptive learning, etc.

Operations of TM 136 can include obtaining, determining, and managing touchpad configuration 138, which is also shown (e.g., by dashed lines) to be centralized or distributed for storage and utilization in TP storage device 124 and/or host storage device 128.

The touch interface (e.g., via TM 136) can be configured to dynamically adjust/adapt/calibrate touch profiles (e.g., features), touch feature weights, touch class determination sensitivity (e.g., threshold(s)), compensation/calibration parameters of force sensors of TP assembly 120 based on, for example, detected/processed finger, palm, instrument, and/or moisture touches, screen and/or ambient environmental conditions (e.g., humidity or moisture detection), detected performance degradation, etc. The dynamic adjustments may be stored, for example, in the prevailing touchpad configuration 138 applied by TM 136 to data/features in touch event datasets.

TM 136 (e.g., executed by TP TC 122 and/or host processor 126) can be configured to control sampling (e.g., data generation and collection) of the touch sensor array and the force sensor array. TM 136 can be configured to control processing of the samples to classify any touch events in the samples according to classes in a set of classifications, such as finger, palm, passive instrument, active instrument, moisture, and/or other classes. TM 136 implements touch profiling and classification (e.g., machine learning (ML) classification) of touch events, for example, by analyzing touch characteristics, such as contact location, contact shape, area, capacitive intensity, contact dynamics (e.g., change in size, change in shape, movement over multiple frames, velocity of movement), temporal characteristics (e.g., touch time, touch consistency), palm indication, spatial clustering, OS and/or application context, applied force, etc.

TM 136 may implement dynamic touch zones. Dynamically adjustable touch zoning is shown in FIG. 1 by movable vertical dashed lines 150A and 150B indicating a delineation between perimeter inactive (e.g., dead) zones and a central active zone of TP assembly 120. Other delineations between active zones and inactive zones may have any shape, e.g., linear, nonlinear, symmetrical, asymmetrical, etc. The bidirectional arrows and multiple dashed lines indicate the active and inactive touch zones can be dynamically adjusted by TM 136. For example, TM 136 may increase an inactive zone/decrease an active zone if a touch event originates in an inactive zone. TM 136 may increase an active touch zone, for example, if TM 136 detects that user 140 is actively and intentionally interacting with TP assembly 120. Touch zones may be increased or decreased in size, for example, incrementally, by predetermined amounts (predetermined border shifts, predetermined area increases/decreases), by amounts calculated based on touch event duration, location, etc. The increment or other touch zones adjustment may vary, for example, depending on the detected touch event(s). Such control of the amount of change to zone size has advantages, including more accurate classifications by avoiding processing power on touch events in inactive zones, while focusing processing power on touch events in active zones. For instance, if a touch event occurs in an inactive zone, the touch event is determined to be unintentional, and the unintentional touch event is near a current border between active and inactive zones, TM 136 may increase the size of the inactive zone (and decrease the size of the inactive zone) by shifting the border line into the active zone to avoid the unintentional touch event to help avoid inadvertent subsequent moves of the touch event into the active zone (e.g., by the user shifting the location of their palm from the inactive zone to the active zone). Likewise, an intentional touch event in the active zone near a current border may trigger TM 136 to shift the border line into the inactive zone. In this manner, processing cycles can be conserved by better treating unintentional touch events as such, while better focusing processing cycles on intentional touch events, thereby improving the user experience.

TM 136 may implement adaptive machine learning classification (e.g., for still and motion frames). TM 136 may implement adaptive dead zone and (e.g., final) classification determinations to customize touch processing and classification performance to user(s) 140. TM 136 may (e.g., also) be configured to implement adaptive and/or user-customized touch profiling (e.g., set of features/characteristics that characterize each touch type), feature weights, and/or touch classification (e.g., adaptive classification thresholds), etc. For example, TM 136 can be configured to provide one or more user interfaces for feedback and/or customization. TM 136 may be configured to provide notification/feedback to users (e.g., visual and/or haptic feedback), operating system 130, and/or application(s) 134 to respond to detection (e.g., classification) of classified user input (e.g., finger contact 142) and/or other input (e.g., unintentional input).

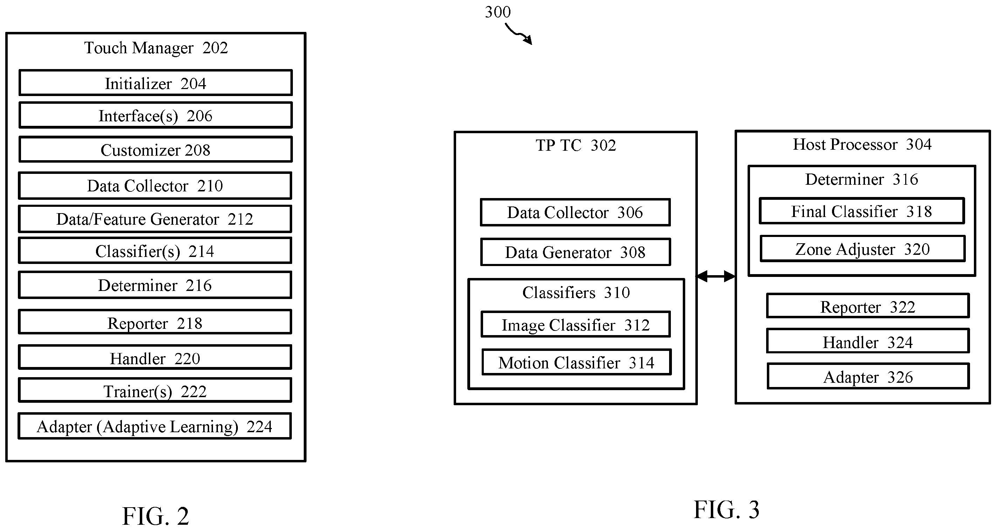

TM 136 of FIG. 1 may be configured in various ways. For instance, FIG. 2 shows a block diagram of an example of a touch manager (TM) 202 configured to enable dynamic touch zones, touch origin detection, multi-classification, and adaptive learning, in accordance with an embodiment. TM 202 is an example of TM 136 shown in FIG. 1. TM 202 may be implemented in hardware, firmware, and/or executable software, which may be executed with respect to a touchpad, for example, by TP TC 122 and/or host processor 136. TM 202 shows one of many possible examples of operational components for dynamic touch zones, touch origin detection, multi-classification, and adaptive learning. Other examples may implement the same or different operational components. As shown in FIG. 2, TM 202 includes initializer 204, interface(s) 206, customizer 208, data collector 210, data generator 212, classifier(s) 214, determiner 216 (e.g., final classifier and zone adjuster), reporter 218, handler 220, trainer(s) 222, and adapter (e.g., adaptive learning) 224. The components of TM 202 are described in further detail as follows.

Initializer 204 may be part of a preprocessor configured to perform initialization of components, e.g., based on a configuration, such as TP configuration 138. Initializer 204 may be configured to initialize touchpad components with configured operating parameters (e.g., constants, multipliers, weights, thresholds) for sampling, normalization, filtering, communications, storage addresses, data/feature classifications, etc. Initializer 204 may be configured to perform calibration of sensors, e.g., touch sensors and/or force sensors. Initializer 204 may be configured to set one or more touch zones (e.g., initial, default, user-customized, or custom learned touch zones) on the touchpad. For example, initializer 204 may define one or more dead zones and an active area. The dead zones may be peripheral areas of the touchpad. The active zone may be a central area of the touchpad. Touches originating in a dead zone may receive additional scrutiny compared to touches originating in the active zone. Initializer 204 may store initialization information in storage (e.g., TP storage device 124) for use during initialization.

Interface(s) 206 may be configured to access/receive input and access/provide output for operations of TM 202. Interface(s) 206 may include one or more different types of interfaces, which may be wired or wireless. For example, interface(s) 206 may read information from and write information to one or more storage devices, such as TP storage device 124 and/or host storage device 128. Interface(s) 206 may provide (e.g., send/transmit) reports (e.g., classified or unclassified touch event BLOBs) generated by reporter 218 to OS 130. Interface(s) 206 may receive and store (e.g., buffer) touch data (e.g., including applied force data) obtained by data collector 210. Interface(s) 206 may provide touch data (e.g., including applied force data) to data generator 212, e.g., and write extracted data/feature sets to storage device(s) for analyses by TM 202. Interface(s) 206 may access and provide touch data/features to classifier(s) 214 generated by data generator 212 or labeled data/features on behalf of trainer(s) 222. Interface(s) 206 may access and provide classified touches to handler 220 for analysis/determination of and response to user intent, e.g., relative to content (e.g., provided by OS 130 and/or application(s) 134) displayed by display panel that user 140 appears to have interacted with by the interpreted touch event(s) and/or handling of non-user input, such as providing feedback for detected user input touch events. Interface(s) 206 may provide one or more user interfaces, e.g., for user 140 to directly or indirectly customize touch/contact profiles, weights, classification thresholds, etc.

Customizer 208 may be configured to allow user 140 to customize (e.g., directly or indirectly) touch profiles, feature weights, classification thresholds, calibration compensators, weights for weighted averaging by calibration determiner 348, calibration triggers, etc. User 140 may be motivated to provide user settings/customization to adjust configuration/operation of touch profiles and/or classifications (e.g., improve differentiation of touch inputs and non-touch inputs), for example, based on accessibility, such as to overcome limitations in hand and/or finger usage, based on application-specific reasons, such as gaming or word processing, and/or based on environment-specific reasons, such as working in a hot, humid environment or a cold, dry environment. Customizer 208 may store customized settings, for example, in touchpad configuration 138.

Customizer 208 can improve user accessibility and application-specific interaction (e.g., gaming) by supporting customization of touch to more accurately identify user inputs for one or more touch devices (e.g., touchscreen, touchpad). Customizer 208 may be configured to allow user 140 to navigate a user interface (e.g., part of interface(s) 206) and select/specify/configure user settings for touch-based user input detection for touchscreen assembly 106 and/or touchpad assembly 120. Customizer 208 may provide a user interface or may utilize an interface provided by interface(s) 206. For example, customizer 208 may permit user 140 to provide user settings via direct input and/or via training that can change one or more profiling/classification characteristics, such as the touch size, shape, duration, consistency, capacitance intensity, dynamics (e.g., shape change, size change, movement pattern, velocity), multi-touch pattern/clustering, palm indication, applied force, and/or other parameter(s) utilized by classifier(s) to detect user input, distinguish between different types of user input, and/or distinguish between user input and non-user input. Customizer 208 may recognize one or more keys (e.g., key combinations) programmed to customize operation of TM 202 (e.g., for a particular application or user) for touch inputs detected by a touchscreen and/or touchpad.

Data collector 210 may be configured to collect data for touch events, e.g., including force sensor data used for calibration and/or training of machine-learning models, e.g., in some implementations of classifier(s) 214. Data collector 210 may include one or more touch samplers to collect data from different touch devices (e.g., touch device 160, touch device 162) and/or from different sensor arrays (e.g., touch sensor array, force sensor array). Data collector 210 may perform sampling of touch sensor array, the force sensor array, and/or other sources of data pertinent to touch profiling/classification and calibration. Data collector 210 receives sampled data from the touch sensor array and the force sensor array. Data collector 210 may be scheduled to sample (e.g., periodic sampling) or may sample ad hoc (e.g., on demand). For example, data collector 210 may perform sampling periodically (e.g., every 10 msec) or based on detection of a signal (e.g., a change in capacitance) on the touch sensor array and/or the force sensor array. Touch sensor data may generate a "heat map." Contact/touch data/features (e.g., characteristics, parameters) collected by data collector 210 may include, for example, contact location, contact shape, area, capacitive intensity, contact dynamics (e.g., change in size, change in shape, movement over multiple frames, velocity of movement), temporal characteristics (e.g., duration of touch), palm indication, spatial clustering, OS and/or application context, applied force, multi-touch pattern, applied force/pressure, etc., which may be combined with adaptive/customized profiling and/or adaptive/customized classification (e.g., adaptive thresholds).. Data collector 210 can be configured to assign a timestamp to data or a dataset associated with each frame of the touchpad.

In some examples, data collector 210 and data/feature generator 212 may be merged (e.g., data collector 210 may be a data collector-generator performing data/feature collection and generation/extraction). For example, data collector 210 may perform data generation (e.g., data/feature extraction/calculation), e.g., by processing collected data to generate other data. In some examples, data collector 210 may include a signal processor/analyzer to analyze collected data. Data collector 210 may be configured to collect and/or generate a list of data/features indicated in a configuration (e.g., TP configuration 138) for touch type classification, etc.

Data collector 210 may store each of a series of (e.g., periodically collected and/or generated) datasets in TP storage device 124 and/or host storage device 128. Data collector 210 may track contacts/touches through multiple frames. For example, data collector 210 may assign identifiers (IDs) to each contact/touch to track each touch event through multiple frames. Breaking contact and re-establishing contact may result in assignment of a different ID to re-established contact. Touch event tracking allows data collector 210 to collect/extract data/features determined across multiple frames for each contact/touch. For example, the velocity, direction, applied force determined based on sensor signal data across frames may vary during a touch event.

Data generator 212 may be configured to extract (e.g., determine, generate) a set of data/features from the dataset collected by data collector 210. Data generator 212 may also be referred to as a featurizer. Data generator 212 may process each dataset for each frame collected by data collector 210. Contact/touch data/features (e.g., characteristics, parameters) generated by data generator 212 may include, for example, contact location, contact shape, area, capacitive intensity, contact dynamics (e.g., change in size, change in shape, movement over multiple frames, velocity of movement), temporal characteristics (e.g., duration of touch), palm indication, spatial clustering, OS and/or application context, applied force, multi-touch pattern, applied force/pressure, etc., which may be combined with adaptive/customized profiling and/or adaptive/customized classification (e.g., adaptive thresholds).. Data generator 212 can be configured to assign a timestamp to data or a dataset associated with each frame of the touchpad. Data generator 212 may process multiple frames to determine data/information/features determined across multiple frames, such as touch direction, velocity, change in shape, change in size, etc.

Data generator 212 may be configured to extract a set of data/features utilized by classifier(s) 214 to classify touch events. For example, data generator 212 may be configured to extract one or more of the following features for each frame for each touch event in a dataset: touch/contact location, size (e.g., area), shape, temporal characteristics (e.g., touch duration, consistency), capacitance intensity, dynamics (e.g., shape change, size change, movement pattern, velocity), clustering, palm indication, applied force, standard deviation of applied force, etc. Data generator 212 may extract, for example, a BLOB representing a touch event and associate additional data (e.g., force sensor data from the force sensor array) with the BLOB so that classifier(s) 214 can classify the BLOB and associated data. The associated data may include or may reference multiple frames that show touch duration, consistency, movement, shape change, size change, velocity, applied force, etc., which may be useful for classification/differentiation among classes. Data generator 212 may perform calculations or otherwise determine (e.g., extract) features, such as geometric profile and size, contact dynamics (e.g., shape change, size change, movement patterns, velocity), touch duration and consistency, spatial distribution of touchpoints, changes in applied force across frames, etc.

Data generator 212 may be configured to generate a list of data/features indicated in a configuration (e.g., TP configuration 138) for touch type classification, etc. Static and dynamic data/features in the set of data/features generated by data generator 212 allows classifier(s) 214 to identify complex relationships and subtle shape nuances that go beyond simple area or density metrics, which results in more robust classification.

Data generator 212 may be configured to preprocess extracted data using a data preprocessor (e.g., data filter, data transformer, data normalizer), for example, to filter, transform and/or normalize data. For example, data generator 212 may perform noise reduction by filtering out electrical noise in a dataset and/or may normalize data for use, e.g., by classifier(s) 214. Normalizer 336 may be configured to normalized filtered force sensor data and/or additional data used by classifier(s) 214. For example, a normalizer may be configured to normalize filtered sensor data based on one or more (e.g., predetermined) scaling parameters. A normalizer can apply scaling factors to normalize sensor data to a common value range, such as zero (0) to one (1), which may be expected by classifier(s) 214.

Classifier(s) 214 (e.g., with determiner 216 making final classification determinations) provide real-time inferences/classification of contacts (e.g., touch events) on one or more touch devices, such as TP assembly 120. Classifier(s) 214 may be configured to classify each touch event based on the set of data/features (e.g., dataset) extracted by data generator 212 for each frame of each touch event. Classifier(s) 214 may include one or more contact/touch event classifiers. In some examples, classifier(s) may generate classifications associated with probabilities (e.g., confidence levels). The classifications may function as intermediate classifications, which may be further analyzed (e.g., by determiner 216) in view of the probabilities and classification thresholds. Thresholds can be fixed, variable, adaptable, and/or customizable. In some examples, classifier(s) 214 may classify touch events as a class among a set of classes. Classes may be general or specific. General classes may include, for example, user input and non-input. Specific classes may include, for example, finger touch, palm touch, passive instrument/pen touch, active pen touch, moisture touch, moisture cluster (e.g., for multiple touch inputs/events), and/or palm cluster (e.g., for multiple touch inputs/events).

Classifier(s) 214 may be implemented in firmware and/or software. Classifier(s) 214 may be an adaptive algorithm or a heuristic algorithm. For example, classifier(s) 214 may include trained machine-learning (ML) model(s) and/or heuristic classifiers. In some examples, ML classifiers may be neural networks (NNs). ML model classifier(s) 214 may be trained by trainer(s) 222 to classify feature sets indicating touch profiles for one or more touch events. An ML model is trained to recognize patterns and differences between different classes or types of contact, such as finger contact 142 and palm contact 146. One or more ML models may be executed by host processor 126, an NPU, and/or TP TC 122. Further description of the training and implementation of ML models referenced herein is provided with respect to ML model 728 of FIG. 7.

Classifier(s) 214 may include multiple (e.g., ML) classifiers that classify one or more frame datasets as general or specific classes. For example, a first classifier can classify a touch event based on a first set of frame datasets and a second classifier can classify the touch event based on a second set of frame datasets associated with the touch event. The second classifier may also classify the touch event based on the first classification. The first set of frame datasets may include, for example, one or more frame datasets. A single frame dataset can be referred to as a still, image, or picture dataset. A multi-frame dataset can be referred to as a motion or video dataset. For example, a first classifier can be an image classifier that generates an image classification, and a second classifier can be a motion classifier that receives the image classification and generates a motion classification of a touch event.

A static/image classifier can perform touch origin analysis, e.g., to determine whether a touch event originated/started in an inactive zone or active zone of the touchpad. Classification by the static/picture classifier can be input to a video classifier. A video classifier can perform movement tracking and characteristic analysis of a touch event. A video classifier can track touch movement direction, velocity of movement, evaluate static values and dynamic changes in touch size, shape, pressure, and duration, identify multi-touch patterns (e.g., palm resting on touchpad while moving thumb to move pointer or scroll), etc. The motion classifier may support a more detailed determination of touches that originate in a dynamically adjustable inactive/dead zone of the touchpad.

Determiner 216 may be configured to analyze classifications generated by one or more classifiers 214, e.g., based on associated probabilities compared to one or more classification thresholds. For example, a default classification/confidence threshold may be 90% or 0.9. Determiner 216 could be configured to finally classify a contact classified as a user touch input with a 90% probability as user touch, which may be reported to the OS for handling. Determiner 216 can be configured to delay a decision for a contact classified as a user touch input with an 89% or lower probability over multiple frames to confirm or reject the classification. The threshold may be fixed or variable, e.g., based on one or more conditions, such as touch origin, environmental conditions, etc. For example, adapter 226 may adjust the threshold and/or the number of frames to classify by classifier(s) 214 based on touch origin, detected environmental conditions, etc. User 140 may customize the classification threshold(s) with fixed or variable thresholds, e.g., with indications of conditions to change customized threshold values. A determination of classification may result in a determination to report user input or to ignore non-input.

Determiner 216 may be configured to be a touch zone adjuster that dynamically controls one or more touch zones of a touchpad. For example, determiner 216 may determine whether to maintain, shrink, expand, or otherwise adapt a touch zone (e.g., dead zone) based on decision and dead zone adaptation logic. A determination to control a touch zone may be based on, for example, a determination of touch origin, such as whether a touch began in an active zone or an inactive/dead zone, a determination that a user is interacting with the touchpad, etc. Touch origin may be determined, for example, by a first classifier (e.g., still/image classifier). User interaction may be determined, for example, based on classifications of touch events by one or more classifiers over one or more frames. For example, determiner 216 can be configured to (e.g., promptly) expand an inactive zone based on (e.g., upon) detection of a touch input (e.g., touch origin in an inactive zone). Determiner 216 can be configured to (e.g., gradually) shrink the inactive area to maximize an active touch area of the touchpad, for example, based on determination that the user is actively interacting with the touchpad.

Classifier(s) 214 and determiner 216 can be trained and/or configured with thresholds (e.g., size thresholds, pressure thresholds) to distinguish between palm and finger touches. Classifier(s) 214 and determiner 216 can be trained and/or configured to identify multi-touch patterns. For example, simultaneous touches over large areas may be indicative of palm contact. Classifier(s) 214 and determiner 216 can be trained and/or configured to distinguish touches based on touch duration. For example, longer, stationary touches in an inactive zone may indicate non-input (e.g., palm).

The logic used by determiner 216 to make classification and touch zone determinations can be reconfigurable, for example, to improve accuracy in touch classifications and/or touch zone adaptations. For example, adapter 226 may engage in adaptive learning of user behaviors and may use the learned knowledge to adapt logic in determiner 216 to change how and/or when determiner 216 determines final classifications and/or how and/or when determiner dynamically controls one or more touch zones, e.g., based on intermediate classifications from one or more classifiers 214. User behaviors can include user touches, user responses that indicate accurate or inaccurate classifications of touch events, etc.

Reporter 218 may be configured to report information from the touch device to the host or from the host to the host, e.g., OS 130, application(s) 134, or host processor 126. Reporter 218 may be configured to report pre-classification information and/or post-classification information. In some examples, reporter 218 may be configured to report touch BLOBs and associated data (e.g., pre-classification information) to OS 130 for classification (e.g., by classifier(s) 214 if/when executed by host processor 126). In some examples, reporter 218 may be configured to report touch BLOBs confirmed by classifier(s) 214 and determiner 216 to be user input, which may avoid erroneous reports on non-user input and, thereby, conserve energy. In some examples, reporter 218 may be configured to report classifications by determiner 216 to OS 130 for handling (e.g., by handler 220).

Handler 220 may be configured to handle or process (e.g., interpret the meaning of and respond to) classified touch inputs. Handler 220 may be implemented, for example, by OS 130 and/or application(s) 134. Handler 220 may interpret the meaning (e.g., user intent) of user input based on the context of the OS 130 or application(s) 134 in which the user input was provided. The context may be based on the information displayed by the display panel at the location of user input (e.g., finger contact 142). For example, a user input may be determined to be a selection in a displayed menu or movement of a pointer. Handler 220 will effectuate the determined intent of the user input. In some examples, a classified user input (e.g., via finger 142) may not occur in the vicinity of an interactive user interface, which may result in no action being taken.

Handler 220 may be configured to provide feedback 144B for user input (e.g., finger touch 142B). Feedback includes, for example, updating the information displayed on display panel to reflect the most recent user touch event(s). Handler 220 may be configured to provide feedback at locations where user input was confirmed based on classification by classifier(s) 214 and confirmation by determiner 216. For example (e.g., as shown in FIG. 1), feedback 144B may be provided at locations where touch input was confirmed by classifier(s) 214 and determiner 216 to be, respectively, user input by finger touch 142B. Feedback may be visual, haptic, etc. For example, haptic feedback may be provided by a haptic actuator associated with TP assembly 120 and/or a visual effect (e.g., a ripple) may be displayed by a display panel associated with TS assembly 106 at the mapped input location of finger touch 142 to let the user know that the user input was detected. Handler 220 may handle (e.g., respond to) touch classifications for OS 130.

Trainer(s) 222 may be configured to train classifier(s) 214 to classify contact/touch event data/feature sets for one or more frames of touch event data. Trainer(s) 222 may be configured to train classifier(s) 214 using training data comprising labeled feature sets, e.g., labeled with the correct classification(s). A training process may split a dataset into training and validation sets, e.g., to train the classifier model on the training set and validate performance of the trained classifier model on the validation set. The labeled dataset may be created based on empirical examples collected during actual or simulated use of computing device 100 or a similar computing device in a variety of environments. Trainer(s) 222 may implement supervised learning to train an ML model classifier 214, such as neural networks, support vector machines (SVM), or decision trees. Trainer(s) 222 may perform hyperparameter tuning, e.g., to optimize a classifier model's hyperparameters to improve accuracy and generalization. For example, a first trainer may be configured to train a first classifier (e.g., an image classifier) and a second trainer may be configured to train a second classifier (e.g., a motion classifier). The training of multiple classifiers may be coordinated with determination logic and determination logic adaptation for accurate classification generally and customizer for user behaviors.

Adapter 224 may be configured to perform machine-learning of user behaviors, e.g., for touch events and responses to classifications of touch events. Adapter 224 may be configured to use learned knowledge to adjust one or more of data/features and/or weights, determiner logic for final classifications, and/or determiner logic for zone adjustments.

For example, adapter 224 may be configured to adapt one or more parameters used by classifier(s) 214 to distinguish between user input classes and/or non-user input classes generally and/or specifically. Adapter 226 may be configured to dynamically adjust one or more parameters, for example, to improve accuracy in differentiation and classification of different types of touch inputs and non-touch inputs. Adapter 308 may adjust profiling/classification parameters/characteristics, weights, sensitivities, and/or thresholds for the parameters/characteristics of classes. Parameters/characteristics may include, for example, touch location, origin, size, shape, duration, consistency, capacitance intensity, dynamics (e.g., shape change, size change, movement pattern, velocity of movement), clustering, palm indication, applied force/pressure, and/or other classification/differentiation parameter(s), such as difference (delta) thresholds between user input classes (e.g., finger touch) and non-user input classes (e.g., palm touch or moisture touch). Adapter 226 may adjust parameters based on, for example, learned user behavior(s) determined by processing detected touch inputs (e.g., differentiations between touch classes, such as finger, palm, instrument, moisture touches), detected ambient environment (e.g., humidity, temperature), detected screen environment (e.g., moisture detection, temperature), etc.

For example, adapter 224 may be configured to adapt (e.g., dynamically adjust) determiner logic for final classifications. For example, adapter 224 may learn that a user indicates inaccurate classification of a touch event based on user responses that undo event classification and handling, and that the user indicates accurate classification of touch events when the user does not undo the event classification and handling. Adapter 224 may modify the logic used by determiner 216 to correctly classify one or more touch events that user indicated were incorrectly classified and handled.

For example, adapter 224 may be configured to adapt (e.g., dynamically adjust) determiner logic for zone adjustments. For example, adapter 224 may learn that the user starts one or more types of touch events in an inactive zone that winds up being classified as user input. Adapter 224 may modify the logic used by determiner 216 to control zone adjustments when the one or more types of touch events are detected in order to reduce processing time/delay in classification and handling. For example, adapter 224 may modify determiner 216 to not expand an inactive zone upon detecting the learned touch event(s).

The components of touch manager 202 may be implemented (e.g., executed) by one or more processors. For instance, FIG. 3 shows a block diagram of an example of a distributed implementation of touch manager 300 configured to provide dynamic touch zones, touch origin detection, multi-classification, and adaptive learning, in accordance with an embodiment. As shown in FIG. 3, in some examples the components of touch manager 300 may be implemented by multiple processors in a computing system. For example, TP TC 302 may be configured to implement (e.g., execute) a data collector 306, a data generator 308, and one or more classifiers 310, including an image classifier 312 and a motion classifier 314. In some examples, a portion of host processor 304 may be set aside for touchpad operations. For example, host processor 304 may be configured to implement (e.g., execute) a determiner 316, e.g., including a final classifier logic 318 and a zone adjuster logic 320, a reporter 322, a handler 324, and an adapter 326. Other examples may not divide touch management operations or may divide touch management operations differently.

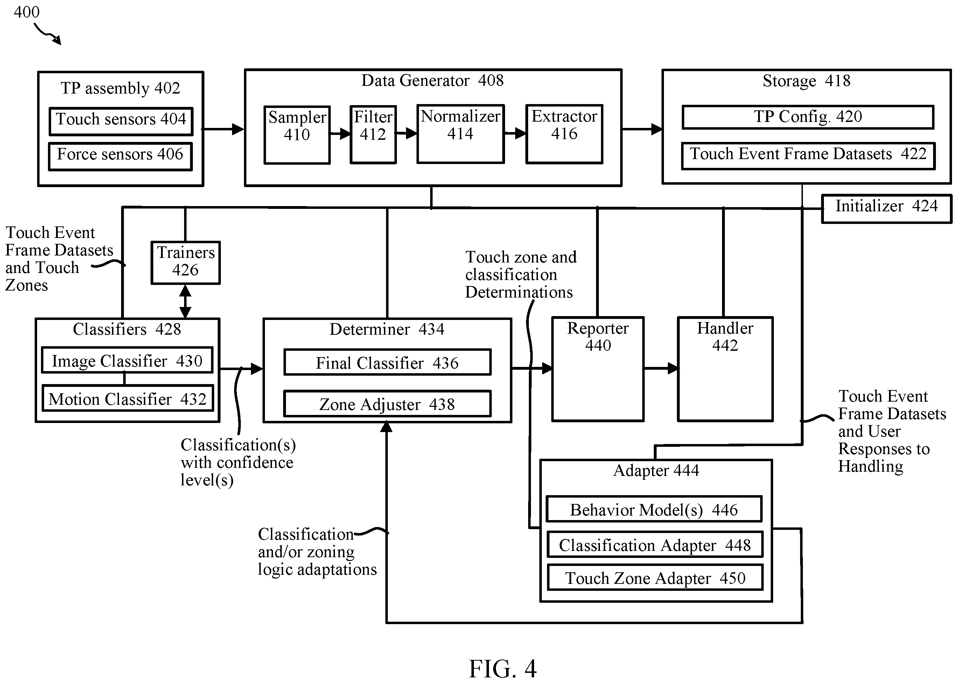

FIG. 4 shows a block diagram of an example of a touch manager 400 configured to provide dynamic touch zones, touch origin detection, multi-classification, and adaptive learning, in accordance with an embodiment. The example shown in FIG. 4 presents an example of interaction between modules/components shown in FIGS. 2 and 3. As shown in FIG. 4, touch manager 400 comprises a TP assembly 402, a data generator 408, a storage 418, a trainer 426, one or more classifiers 428, a determiner 434, a reporter 440, a handler 442, and an adapter 444. TP assembly 402 includes one or more touch sensors 404 and one or more force sensors 406. Data generator 408 includes a sampler 410, a filter 412, a normalizer 414, and an extractor 416. Storage 418 stores a TP configuration 420 and one or more touch event frame datasets 422. Classifiers 428 includes an image classifier 430 and a motion classifier 432. Determiner 434 includes a final classifier 436 and a zone adjuster 438. Adapter 444 includes one or more behavior models 446, a classification adapter 448, and a touch zone adapter 450. These components of touch manager 400 are described in further detail as follows.

TP assembly 402 is an example of TP assembly 120. TP assembly 402 includes touch sensors 404 and force sensors 406, each of which generates sensor signals in response to user touch events on TP assembly 402. Touch sensors 404 include an array of touch sensors (e.g., capacitive touch sensors). Force sensors 406 include an array of force sensors (e.g., pressure sensors). Force sensors 406 generate force sensor signals representative of the force applied by a user (e.g., user 140) when the user makes contact with a touchpad (e.g., by finger, palm, instrument) during a touch event. Touch and force sensor data provide raw information from which features can be determined to characterize image and motion frame data associated with user touch events. The force signals are sampled and processed by data generator 408.

Data generator 408 generates touch event data (e.g., datasets) for each frame of each touch event. Data generator 408 provides data collection, sampling, signal processing, and data extraction/generation. Data generator 408 combines, for example, data collector 210 and data/feature generator 212 in FIG. 2. Data generator 408 stores touch event frame datasets 422 in storage 418. Data generator 408 includes sampler 410, filter 412, normalizer 414, and extractor 416.

Sampler 410 samples touch sensor signals generated by touch sensors 404 and force sensor signals generated by force sensors 406 in response to touch events. Sampler 410 may sample touch sensors 404 and force sensors 406 periodically, such as 100 times per second (e.g., every 10 msec), and/or based on detection of touch events ((e.g., based on changes in sensor signals).

Filter 412 filters touch sensor signals generated by touch sensors 404 and force sensor signals generated by force sensors 406. For example, filter 412 can be configured to apply a moving average filter to touch sensor signals generated by touch sensors 404 and force sensor signals generated by force sensors 406.

Normalizer 414 may be configured to normalize filtered touch sensor data and filtered force sensor data. For example, normalizer 414 can normalize filtered touch sensor data and filtered force sensor data based on one or more (e.g., predetermined) scaling parameters, which may be linear or nonlinear. Normalizer 414 may normalize filtered touch sensor data and filtered force sensor data to values within a range, such as zero (0) to one (1), which may be expected by trained classifiers 428.

Extractor 416 generates data/features utilized by classifiers 428 by processing (e.g., performing calculations on) collected, filtered, and normalized data to generate other force sensor-related data. Data/features (e.g., characteristics, parameters) determined by extractor may include, for example, contact location, such as touch origin (e.g., x,y coordinates in active or inactive touch zone), contact shape, area, capacitive intensity, contact dynamics (e.g., change in size, change in shape, movement over multiple frames, velocity of movement), temporal characteristics (e.g., touch duration), palm indication, spatial clustering, applied force, multi-touch patterns, etc. For example, extractor 416 may look up or calculate the applied force represented by the force sensor data, e.g., based on a mapping or calculation. Data generator 408 stores the determined set of features for each frame for each touch event in storage 418 as touch event frame datasets 422.

Storage 414 stores touchpad (TP) configuration 420, touch event frame datasets, and data from other components of touch manager 400, such as touch zones (e.g., initial and adapted). Storage 414 is an example of TP storage device 124 in FIG. 1.

Initializer 412 initializes each component of touch manager 400 with configuration parameters in TP configuration 420. For example, initializer 424 can be configured to initialize each Initializer 412 can be configured to (e.g., also) define settings and/or parameters (e.g., constants, such as weights, and thresholds) for components (e.g., data generator 408, classifiers 428, determiner 434, and adapter 444), for example, based on TP configuration 420. Initializer 412 is an example of initializer 204 in FIG. 2.

Trainers 426 train one or more machine learning (ML) models (e.g., neural networks) in classifiers 428. Trainer(s) 426 may be configured to train classifier 428 to classify contact/touch event data/feature sets for one or more frames of touch event data. For example, an image trainer trains the image classifier 430 to generate classifications based on a single frame of data and a motion trainer trains the motion classifier 432 to generate classifications based on multiple frames of data. The number of multiple frames may be fixed, variable, dynamically adaptable, etc., which may be initialized by initializer 424. Trainers 426 is an example of trainer(s) 222 in FIG. 2.

Classifier(s) 428 provide real-time inferences/classification of contacts (e.g., touch events) on TP assembly 402. Classifiers 428 provides multiple classifiers to classify different sets of frames of touch event frame datasets 422. For example, each of multiple classifiers 428 (e.g., image classifier 430 and motion classifier 432) may be configured to classify each touch event based on a different set of data/features (e.g., frame datasets) extracted by data generator 408 for each frame of each touch event. Each classifier 428 may generate classifications associated with probabilities (e.g., confidence levels). The classifications may function as intermediate classifications, which may be further analyzed by determiner 434 in view of the probabilities and classification thresholds. Thresholds can be fixed, variable, adaptable, and/or customizable. Each classifier 428 classifies touch events as a class among a set of classes. Classes may be general or specific. General classes may include, for example, user input and non-input. Specific classes may include, for example, finger touch, palm touch, passive instrument/pen touch, active pen touch, moisture touch, moisture cluster (e.g., for multiple touch inputs/events), and/or palm cluster (e.g., for multiple touch inputs/events).

As shown by example in FIG. 4, image classifier 430 may be configured to classify a first set of frames, e.g., a single frame for a touch event, and motion classifier 432 may be configured to classify a second set of frames, e.g., multiple frames of data for the touch event. In some examples, image classifier 430 may first output the touch origination (e.g., beginning of a touch event in an active or inactive zone of TP assembly 402). Determiner 434 may use touch origin to determine whether to classify the touch as user input, non-input, or require further analysis and determine whether to expand, maintain, or shrink one or more touch zones (e.g., active zone(s), inactive zone(s)). For example, a touch originating in an inactive zone may lead determiner 434 to engage in additional analysis and delayed classification, e.g., because multiple frames will be analyzed to try to determine whether the touch event is user input or non-input (e.g., unintentional touch). The multiple frames can be analyzed as images and/or as motion by the image classifier 430 and motion classifier 432. Motion classifier 432 can support a more detailed determination of touches that originate in a dynamically adjustable inactive/dead zone of the TP assembly 402. Motion classifier 432 can generate classifications based on static data (e.g., touch location, touch size, touch shape, touch pressure) and dynamic changes, such as touch movement direction, velocity of movement, change in touch size, shape, pressure, and touch duration, multi-touch movement patterns (e.g., palm resting on touchpad while moving thumb to move pointer or scroll), etc. Classifiers 428 may output one or more classifications to determiner 434. In some examples, the output of a first classifier (e.g., image classifier 430) may be provided to the input of a second classifier (e.g., motion classifier 432) for use in determining classification. Classifiers 428 may output one or more classifications (e.g., and confidence levels) to determiner 434.

Determiner 434 may be configured to determine final classifications and one or more touch zones for TP assembly 402. Final classifications are based on image classifications (e.g., and confidence levels) by image classifier 430 and/or motion classifications (e.g., and confidence levels) by motion classifier 432. Determiner 434 may include, for example, final classifier 436 and zone adjuster 438.

Final classifier 436 generates a final classification of a touch event. Final classifier 436 may be configured to analyze (e.g., apply decision logic to) classifications generated by image classifier 430 and/or motion classifier 432, for example, based on associated probabilities compared to one or more classification thresholds. For example, a default classification/confidence threshold may be 90% or 0.9. Final classifier 436 could be configured to finally classify a contact (e.g., beginning in an active or inactive zone) classified as a user touch input with a 90% probability as user touch, which may be reported to the OS for handling. Final classifier 436 can be configured to delay a decision for a contact classified as a user touch input with an 89% or lower probability over multiple frames to confirm or reject the classification. Similarly, final classifier 436 may be configured to delay classification based on a determination that the touch originated in an inactive zone of TP assembly 402. Final classifier 436 can use touch origin for determinations whether to classify the touch as user input, non-input, or require further analysis. For example, a touch originating in an inactive zone may trigger final classifier 436 to engage in additional analysis and delayed classification, e.g., because multiple frames will be analyzed to try to determine whether the touch event is user input or non-input (e.g., unintentional touch). The multiple frames can be classified by image classifier 430 and/or motion classifier 432, with classification and probability results provided to final classifier 436 for final classification. Determiner 434 (e.g., final classifier 436) may be configured to select a number of frames for further analysis of a touch event, such as a touch event that begins in an inactive zone of the TP assembly 402.

Zone adjuster 438 may be configured to be a touch zone adjuster that dynamically controls one or more touch zones for TP assembly 402. For example, zone adjuster 438 may determine whether to maintain, shrink, expand, or otherwise adapt a touch zone (e.g., dead zone) based on zone adaptation logic. A determination to control a touch zone may be based on, for example, a determination of touch origin, such as whether a touch began in an active zone or an inactive/dead zone, a determination by final classifier 436 that a user is intentionally interacting with TP assembly 402, etc. For example, zone adjuster 438 can use touch origin to determine whether to expand, maintain, or shrink one or more touch zones (e.g., active zone(s), inactive zone(s)). Touch origin may be determined, for example, by image classifier 430. User interaction may be determined, for example, based on classifications of touch events by final classifier 436 over one or more frames. For example, zone adjuster 438 can be configured to (e.g., promptly) expand an inactive zone based on (e.g., upon) detection of a touch input (e.g., touch origin in an inactive zone). Zone adjuster 438 can be configured to (e.g., gradually) shrink one or more inactive zones to maximize an active touch zone of the touchpad, for example, based on determination that the user is actively interacting with the touchpad.

Final classifier 436 and zone adjuster 438 may base decisions on one or more thresholds. The threshold may be fixed or variable, e.g., based on one or more conditions, such as touch origin, touch ambiguity from initial frames, environmental conditions, user selections, etc. For example, adapter 444 may adjust the threshold and/or the number of frames to classify by classifiers 428 based on touch origin, detected environmental conditions, etc. Users may customize the classification threshold(s) with fixed or variable thresholds, e.g., with indications of conditions to change customized threshold values. A determination of (e.g., general or specific) classification may be provided to reporter 440 and/or to adapter 444 to determine whether to report user input or to ignore non-input and/or to learn user behaviors that may be utilized to adjust final classifier logic and/or zone adjuster logic. Zone adjuster 438 may be configured to adapt touch zones in response to intermediate and/or final classifications and/or based on user selections. In some examples, a user can restrict or eliminate inactive zones.

The classification logic used by final classifier 436 to make final classifications and/or the zoning logic used by zone adjuster 438 to make touch zone determinations can be reconfigurable, for example, to improve accuracy in touch classifications and/or touch zone adaptations. For example, adapter 226 may engage in adaptive learning of user behaviors and may use the learned knowledge to adapt logic in final classifier 436 and/or zone adjuster 438 to change how and/or when final classifier 436 determines final classifications and/or how and/or when zone adjuster 438 dynamically controls one or more touch zones. User behaviors can include user touches, user responses that indicate whether classifications of touch events were accurate or inaccurate, etc.

Reporter 440 may be configured to receive touch event classification determinations from determiner 434. Reporter 440 may be configured to report information about user input from the touch device to the host or from the host to the host, e.g., OS 130, application(s) 134, or host processor 126. Reporter 440 may be configured to report pre-classification information (e.g., touch event features in one or more frames) and/or post-classification information (e.g., touch event classification). In some examples, reporter 440 may be configured to report touch BLOBs and associated data (e.g., pre-classification information) to OS 130 for classification (e.g., by classifiers 428 if/when executed by host processor 126). In some examples, reporter 440 may be configured to report touch BLOBs confirmed by determiner 434 to be user input, which may avoid erroneous reports on non-user input and, thereby, conserve energy. In some examples, reporter 440 may be configured to report classifications of user input by final classifier 436 to OS 130 for handling (e.g., by handler 442).

Handler 442 may be configured to handle or process (e.g., interpret the meaning of and respond to) touch events that final classifier 436 classified as user input. Handler 442 may be implemented, for example, by OS and/or application(s). Handler 442 may interpret the meaning (e.g., user intent) of user input based on the context of the OS or application(s) in which the user input was provided. The context may be based on the information displayed by the display panel at the location of user input (e.g., finger contact). For example, a user input may be determined to be a selection in a displayed menu or movement of a pointer. Handler 442 will effectuate the determined intent of the user input. In some examples, a classified user input (e.g., via finger) may not occur in the vicinity of an interactive user interface, which may result in no action being taken.

Handler 442 may be configured to provide feedback 144B for user input (e.g., finger touch 142B). Feedback includes, for example, updating the information displayed on display panel to reflect the most recent user touch event(s). Handler 220 may be configured to provide feedback at locations where user input was confirmed based on classification by classifier(s) 214 and confirmation by determiner 216. For example (e.g., as shown in FIG. 1), feedback 144B may be provided at locations where touch input was confirmed by classifier(s) 214 and determiner 216 to be, respectively, user input by finger touch 142B. Feedback may be visual, haptic, etc. For example, haptic feedback may be provided by a haptic actuator associated with TP assembly 120 and/or a visual effect (e.g., a ripple) may be displayed by a display panel associated with TS assembly 106 at the mapped input location of finger touch 142 to let the user know that the user input was detected. Handler 220 may handle (e.g., respond to) touch classifications for OS 130.

Adapter 444 may be configured to perform machine-learning of user behaviors in interactions with a computing device, including TP assembly 402. Adapter 444 can be configured to learn from user touch events and user responses to classifications of touch events. Adapter 444 may be configured to use learned knowledge to adjust logic used by final classifier 436 for final classifications, and/or zoning logic used by zone adjuster 438 for zone adjustments. As shown by example in FIG. 3, adapter 444 may include, for example, user behavior model(s) 446, classification adapter 448, and touch zone adapter 450.

Behavior model(s) 446 may include one or more ML models configured to learn user behavior from touch event frame datasets 422, user responses to classification and handling (e.g., undo operations indicating inaccurate classification and/or handling), touch zone determinations, and touch classification determinations. For example, as shown in FIG. 1, behavior model(s) 446 can learn that user 140 rests a palm 146A on TP assembly 120 while using the thumb 142A to move the cursor. Behavior model(s) 446 may learn over several repeated attempts by user 140 to enter user input 142A. Sometimes, behavior model(s) 446 learn based on undo operations by user 140 that indicate incorrect classification and/or handling. Recognizing user behaviors, such as multi-touch patterns and other user interactions, can lead to modification of final classifier 436 by classification adapter 448 and zone adjuster 438 by touch zone adapter 450.

Classification adapter 448 is configured to adapt logic used by final classifier 436 based on user behavior(s) learned by behavior model(s) 446. For example, in response to learning that user 140 rests a palm 146A on TP assembly 120 while using the thumb 142A to move the cursor, classification adapter 448 can be modified with an exception in final classifier logic to more quickly recognize the user behavior in fewer frames and more quickly classify the user input 142A.

Touch zone adapter 450 is configured to adapt logic used by zone adjuster 438 based on user behavior(s) learned by behavior model(s) 446. For example, in response to learning that user 140 rests a palm 146A on TP assembly 120 while using the thumb 142A to move the cursor, zone adjuster 438 can be modified with an exception in zone adjustment logic to maintain the zone boundary 150A (e.g., to not expand inactive zone) upon classification of the multi-touch pattern with palm contact 146A and finger sliding 142A, supporting faster classification by classification adapter 448 and faster handling of the user input.

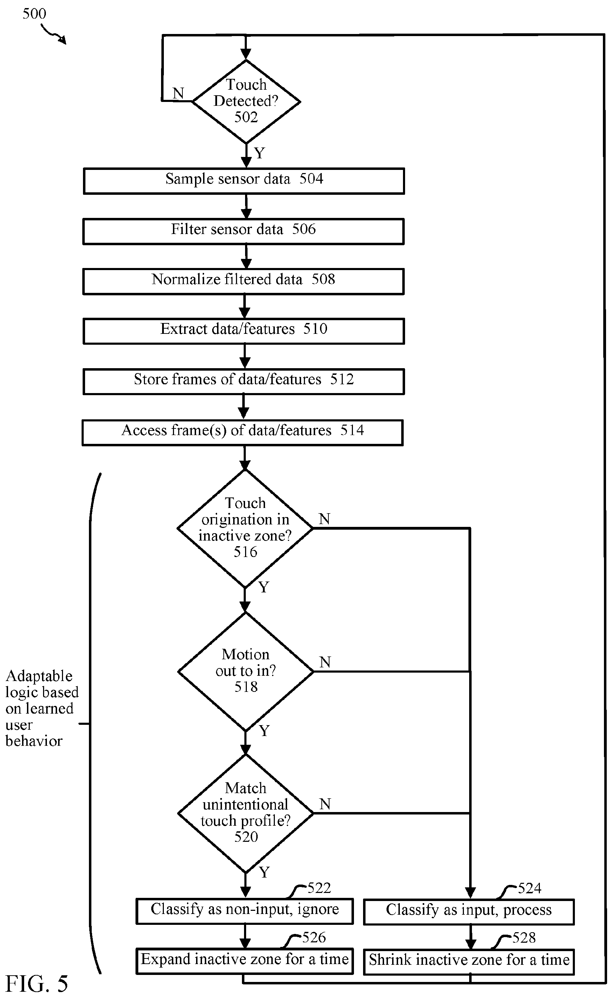

Embodiments disclosed herein may operate in various ways. For instance, FIG. 5 shows a flowchart for an example process for providing a touchpad with dynamic touch zones, touch origin detection, multi-classification, and adaptive learning, in accordance with an embodiment. Embodiments disclosed herein and other embodiments may operate in accordance with examples shown in FIGS. 1-4. Example flowchart 500 shows an example method executed by touchpad assembly 120 (e.g., the touch sensor array, the force sensor array), TP TC 122/302, host processor 126/304, TM 136/202/300/400, etc. Flowchart 500 comprises steps 502-528. However, other embodiments may operate according to other methods, such as described with respect to FIG. 5. Other structural and operational embodiments will be apparent to persons skilled in the relevant art(s) based on the foregoing discussion of embodiments. No order of steps is required unless expressly indicated or inherently required. There is no requirement that a method embodiment implement all of the steps illustrated in FIG. 5. FIG. 5 is simply one of many possible embodiments. Embodiments may implement fewer, more or different steps.

As shown in FIG. 5, steps 502-512 illustrate touch data generation and storage, steps 514-528 illustrate data processing (e.g., intermediate classification, final classification, touch zone control, reporting, handling). Although steps 504-512 can be configured to run continuously and/or based on touch events to collect and store sensor data and data/features generated from the sensor data, the example method 500 provides step 502 as a conditional step that makes steps 504-514 event driven operations (e.g., based on touch detections). Steps 514-528 may be configured to run based on the presence of data/features that can be processed (e.g., event driven operations).

In step 502, a determination is made whether a touch event has been detected. For example, as shown in FIGS. 1-4, TM 136/202/300/400 (e.g., data collector 210/306 or sampler 410) monitor touch sensors 404 and force sensors 406, where a detection of changes in sensor data indicates a touch event.

In step 504, touch and force sensor data is sampled. For example, as shown in FIGS. 1-4, data collector 210/306 or sampler 410 sample touch sensors 404 and force sensors 406 for touch and force sensor data generated in response to the user touch event.

In step 506, a filter is applied to the sensor data. For example, as shown in FIGS. 1-4, filter 412 applies a moving average filter to sensor data sampled in step 504.

In step 508, the filtered data is normalized. For example, as shown in FIGS. 1-4, normalizer 414 normalizes the filtered sensor data. Normalizer 414 may use different (e.g., linear or nonlinear) scaling factors for the touch sensor data and the force sensor data, e.g., based on application of settings in TP configuration 420 configured by initializer 424.

In step 510, data/features are extracted from the filtered and normalized touch sensor data and force sensor data. For example, as shown in FIGS. 1-4, data generator 212/308/408 (e.g., extractor 416) extracts data/features for image classifier 430 and motion classifier 432 from filtered and normalized touch and sensor data.

In step 512, the data/features are stored for each frame of the touch event. For example, as shown in FIGS. 1-4, data collector 210/306 and data generator 212/308/408 (e.g., extractor 416) store data/features (e.g., including normalized/filtered sensor data) as touch event frame datasets 422.

In step 514, the stored (e.g., buffered) data/features are accessed for processing. For example, as shown in FIGS. 1-4, classifiers 214/310/428 access respective features in touch event frame datasets 422 for image classification and motion classification, e.g., with associated confidence levels. The image classification and probability generated by image classifier 312/430 and motion classification and probability generated by motion classifier 314/432 are used by determiner 434 in steps 516-528.

In step 516, a determination is made whether the touch event originated in an inactive zone of the TP assembly. If so, the process continues to step 518. If not, the process continues to step 524. For example, as shown in FIGS. 1-4, determiner 434 (e.g., final classifier 436) uses the image classification or touch location feature (e.g., x,y coordinates) and knowledge of the location of the active and inactive zones to determine whether the touch event originated in an inactive zone. Determiner 434 classifies the touch event as user input if the touch event doesn't begin in the inactive zone. Determiner 434 delays classification if the touch event begins in the inactive zone.

In step 518, a determination is made whether the touch movement is outside to inside. If so, the process continues to step 520. If not, the process continues to step 524. For example, as shown in FIGS. 1-4, determiner 434 (e.g., final classifier 436) uses the motion classification by motion classifier 432 or features in frame datasets 422 to determine the direction of movement of the touch. Determiner 434 classifies the touch event as user input if the touch movement is not outside (e.g., inactive zone) towards inside (e.g., towards active zone). Determiner 434 delays classification if the touch event movement is outside to inside.

In step 520, a determination is made whether the data/features indicate an unintentional touch profile, such as a palm touch. If so, the process continues to step 522. If not, the process continues to step 524. For example, as shown in FIGS. 1-4, determiner 434 (e.g., final classifier 436) uses the image classification by image classifier 430, motion classification by motion classifier 432, and/or features in frame datasets 422, such as touch size and/or touch shape, to determine whether the touch event matches the profile of an unintentional touch, which the classifiers may be trained to identify. Determiner 434 (e.g., final classifier 436) classifies the touch event as user input if the touch event does not match the profile of an unintentional touch. Determiner 434 classifies the touch event as non-input if the touch event matches the profile of an unintentional touch.

In step 522, a touch event that originated in the inactive zone, includes motion from outside to inside, and matches an unintentional touch profile is classified as non-input and ignored without further processing. For example, as shown in FIGS. 1-4, determiner 434 (e.g., final classifier 436) classifies the touch event as non-input if the touch event originated in the inactive zone, includes motion from outside to inside, and matches the profile of an unintentional touch.

In step 524, a touch event that originated in an active zone of the touchpad or did not include outside to inside motion or that does not match an unintentional touch profile is classified as user input and processed (e.g., receives continued classification of additional frames, is reported and handled). For example, as shown in FIGS. 1-4, determiner 434 (e.g., final classifier 436) classifies the touch event as user input if the touch event does not originate in an active zone of the touchpad, does not include outside to inside motion, or does not match an unintentional touch profile.

In step 526, an inactive zone is expanded (e.g., for a time period) in response to classification of a touch event as non-input in step 522. For example, as shown in FIGS. 1-4, determiner 434 (e.g., zone adjuster 438) expands the current inactive zone near the touch event (e.g., for a time period) if the determiner 434 (e.g., final classifier 436) classified the touch event as non-input.

In step 528, an inactive zone is shrunk (e.g., for a time period) in response to classification of a touch input as user input in step 524. For example, as shown in FIGS. 1-4, determiner 434 (e.g., zone adjuster 438) shrinks the current inactive zone near the touch event (e.g., for a time period) if the determiner 434 (e.g., final classifier 436) classified the touch event as user input.

As shown by example in FIG. 5, steps 516-526 can be modified by an adapter (e.g., adapter 224/326/444) based on learned user behavior.

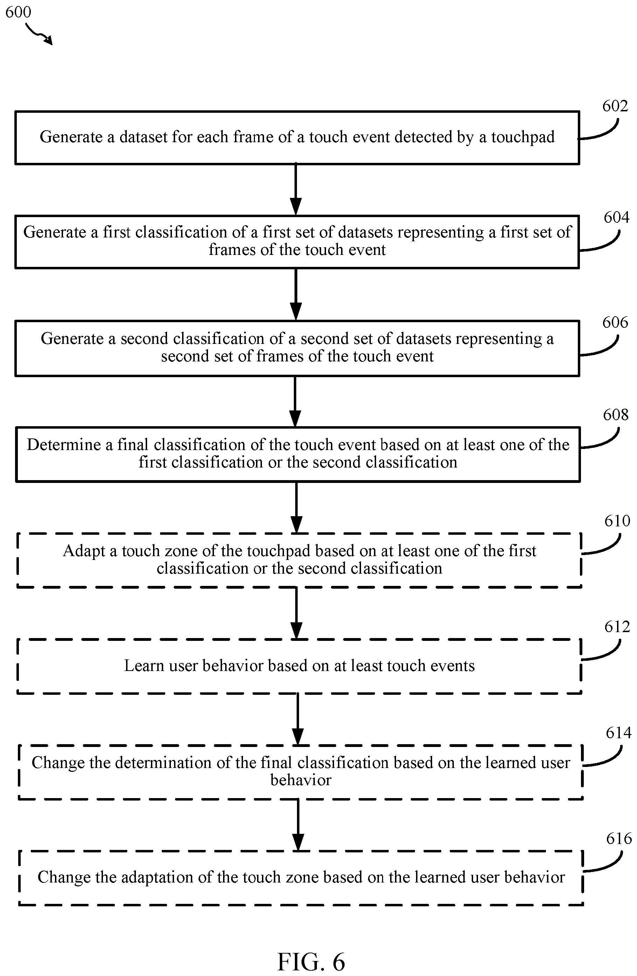

FIG. 6 shows a flowchart for an example process for providing a touchpad with dynamic touch zones, touch origin detection, multi-classification, and adaptive learning, in accordance with an embodiment. Embodiments disclosed herein and other embodiments may operate in accordance with examples shown in FIGS. 1-5. Flowchart 600 shows an example method executed by touchpad assembly 120 (e.g., the touch sensor array, the force sensor array), TP TC 122/302, host processor 126/304, TM 136/202/300/400, etc. The example shown in FIG. 6 includes operations 602-608 and, alternatively (e.g., as shown by dashed lines), steps 610-616. There is no requirement that a method embodiment implement all of the steps illustrated in FIG. 6. FIG. 6 is simply one of many possible embodiments. Various embodiments may implement one or more operations shown in FIG. 6 with additional and/or alternative steps. Further structural and operational embodiments will be apparent to persons skilled in the relevant art(s) based on the following description of FIG. 6.

As shown in example flowchart 600, at step 602, a dataset is generated for each frame of a touch event detected by a touchpad. For example, as shown in FIGS. 1-4, data generator 212/308/408 (e.g., extractor 416) extracts data/features for image classifier 430 and motion classifier 432 from each frame of filtered and normalized touch and sensor data.

At step 604, a first classification is generated for a first set of datasets representing a first set of frames of the touch event. For example, as shown in FIGS. 1-4, image classifier 430 classifies a first set of frames, e.g., a single frame, for the touch event.

At step 606, a second classification is generated for a second set of datasets representing a second set of frames of the touch event. For example, as shown in FIGS. 1-4, motion classifier 432 classifies a second set of frames, e.g., multiple frames, for the touch event.

At step 608, a final classification of the touch event is determined based at least on one of the first classification or the second classification. For example, as shown in FIGS. 1-4, determiner 434 (e.g., final classifier 436) determines a final classification of the touch event based on the image classification generated by image classifier 430 and/or the motion classification generated by motion classifier 432, e.g., utilizing associated classification probabilities compared to one or more classification thresholds.

At step 610, a touch zone of the touchpad is adapted based at least on one of the first classification or the second classification. For example, as shown in FIGS. 1-4, determiner 434 (e.g., zone adjuster 438) dynamically controls (e.g., adapts) one or more touch zones for TP assembly 402 by maintaining, shrinking, expanding, changing the shape, or otherwise adapting a touch zone (e.g., dead zone) by applying zone adaptation logic to the image classification generated by image classifier 430 and/or the motion classification generated by motion classifier 432.

At step 612, user behavior is learned from (e.g., based on) at least touch events. For example, as shown in FIGS. 1-4, adapter 444 (e.g., behavior model(s) 446) learns user behavior from one or more touch events on TP assembly 402.

At step 614, the determination of the final classification is changed based on the learned user behavior. For example, as shown in FIGS. 1-4, adapter 444 (e.g., classification adapter 448) changes the classification logic of final classifier 436 based on the learned user behavior.

At step 616, the adaptation of the touch zone is changed based on the learned user behavior. For example, as shown in FIGS. 1-4, adapter 444 (e.g., touch zone adapter 450) changes the touch zoning logic of zone adjuster 438 based on the learned user behavior.

### III. Example Computing Device Embodiments

In embodiments, one or more of TP TC 122/302, TM 136/302, OS 130, application(s) 134, TP config 138/420, initializer 204/424, interface(s) 206, customizer 208, data collector 210/306, data generator 212/308/408, classifiers 214/310/428, determiner 216/316/434, reporter 218/322/440, handler 220/324/442, trainers 222/426, adapter 224/326/444, image classifier 312/430, motion classifier 314/432, final classifier 318/436, zone adjuster 320/438, sampler 410, filter 412, normalizer 414, extractor 416, behavior model(s) 446, classification adapter 448, touch zone adapter 450, flowcharts 500 and 600 is/are implemented with computer program code/instructions configured to be executed in one or more processors and stored in a computer readable storage medium. Additionally or alternatively, one or more of TP TC 122/302, TM 136/302, OS 130, application(s) 134, TP config 138/420, initializer 204/424, interface(s) 206, customizer 208, data collector 210/306, data generator 212/308/408, classifiers 214/310/428, determiner 216/316/434, reporter 218/322/440, handler 220/324/442, trainers 222/426, adapter 224/326/444, image classifier 312/430, motion classifier 314/432, final classifier 318/436, zone adjuster 320/438, sampler 410, filter 412, normalizer 414, extractor 416, behavior model(s) 446, classification adapter 448, touch zone adapter 450, flowcharts 500 and 600 are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions. In still further embodiments, one or more of TP TC 122/302, TM 136/302, OS 130, application(s) 134, TP config 138/420, initializer 204/424, interface(s) 206, customizer 208, data collector 210/306, data generator 212/308/408, classifiers 214/310/428, determiner 216/316/434, reporter 218/322/440, handler 220/324/442, trainers 222/426, adapter 224/326/444, image classifier 312/430, motion classifier 314/432, final classifier 318/436, zone adjuster 320/438, sampler 410, filter 412, normalizer 414, extractor 416, behavior model(s) 446, classification adapter 448, touch zone adapter 450, flowcharts 500 and 600 are implemented in further forms of electrical circuitry, including logic gates, transistors, operational amplifiers, field programmable gate arrays (FPGAs), etc.

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 7. FIG. 7 shows a block diagram of an exemplary computing environment 700 that includes a computing device 702. Computing device 702 is an example of computing device 100 of FIG. 1, which may include one or more of the components of computing device 702. In some embodiments, computing device 702 is communicatively coupled with devices (not shown in FIG. 7) external to computing environment 700 via network 704. Network 704 comprises one or more networks such as local area networks (LANs), wide area networks (WANs), enterprise networks, the Internet, etc. In examples, network 704 includes one or more wired and/or wireless portions. In some examples, network 704 additionally or alternatively includes a cellular network for cellular communications. Computing device 702 is described in detail as follows.

Computing device 702 is any of a variety of types of computing devices. Examples of computing device 702 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 702 is a stationary computing device such as a desktop computer, a personal computer (PC), a stationary server device, a minicomputer, a mainframe, a supercomputer, etc.

As shown in FIG. 7, computing device 702 includes a variety of hardware and software components, including a processor 710, a storage 720, a graphics processing unit (GPU) 742, a neural processing unit (NPU) 744, one or more input devices 730, one or more output devices 750, one or more wireless modems 760, one or more wired interfaces 780, a power supply 782, a location information (LI) receiver 784, and an accelerometer 786. Storage 720 includes memory 756, which includes non-removable memory 722 and removable memory 724, and a storage device 788. Storage 720 also stores an operating system 712, application programs 714, and application data 716. Wireless modem(s) 760 include a Wi-Fi modem 762, a Bluetooth modem 764, and a cellular modem 766. Output device(s) 750 includes a speaker 752 and a display 754. Input device(s) 730 includes a touch screen 732, a microphone 734, a camera 736, a physical keyboard 738, and a trackball 740. Not all components of computing device 702 shown in FIG. 7 are present in all embodiments, additional components not shown may be present, and in a particular embodiment any combination of the components are present. In examples, components of computing device 702 are mounted to a circuit card (e.g., a motherboard) of computing device 702, integrated in a housing of computing device 702, or otherwise included in computing device 702. The components of computing device 702 are described as follows.

In embodiments, a single processor 710 (e.g., central processing unit (CPU), microcontroller, a microprocessor, signal processor, ASIC (application specific integrated circuit), and/or other physical hardware processor circuit) or multiple processors 710 are present in computing device 702 for performing such tasks as program execution, signal coding, data processing, input/output processing, power control, and/or other functions. In examples, processor 710 is a single-core or multi-core processor, and each processor core is single-threaded or multithreaded (to provide multiple threads of execution concurrently). Processor 710 is configured to execute program code stored in a computer readable medium, such as program code of operating system 712 and application programs 714 stored in storage 720. The program code is structured to cause processor 710 to perform operations, including the processes/methods disclosed herein. Operating system 712 controls the allocation and usage of the components of computing device 702 and provides support for one or more application programs 714 (also referred to as "applications" or "apps"). In examples, application programs 714 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 710 includes one or more general processors (e.g., CPUs) configured with or coupled to one or more hardware accelerators, such as one or more NPUs 744 and/or one or more GPUs 742.

Any component in computing device 702 can communicate with any other component according to function, although not all connections are shown for ease of illustration. For instance, as shown in FIG. 7, bus 706 is a multiple signal line communication medium (e.g., conductive traces in silicon, metal traces along a motherboard, wires, etc.) present to communicatively couple processor 710 to various other components of computing device 702, although in other embodiments, an alternative bus, further buses, and/or one or more individual signal lines is/are present to communicatively couple components. Bus 706 represents one or more of any of several types of bus structures, including a memory bus or memory controller, a peripheral bus, an accelerated graphics port, and a processor or local bus using any of a variety of bus architectures.

Storage 720 is physical storage that includes one or both of memory 756 and storage device 788, which store operating system 712, application programs 714, and application data 716 according to any distribution. Non-removable memory 722 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 722 includes main memory and is separate from or fabricated in a same integrated circuit as processor 710. As shown in FIG. 7, non-removable memory 722 stores firmware 718 that is present to provide low-level control of hardware. Examples of firmware 718 include BIOS (Basic Input/Output System, such as on personal computers) and boot firmware (e.g., on smart phones). In examples, removable memory 724 is inserted into a receptacle of or is otherwise coupled to computing device 702 and can be removed by a user from computing device 702. Removable memory 724 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 788 are present that are internal and/or external to a housing of computing device 702 and are or are not removable. Examples of storage device 788 include a hard disk drive, a SSD, a thumb drive (e.g., a USB (Universal Serial Bus) flash drive), or other physical storage device.

One or more programs are stored in storage 720. Such programs include operating system 712, one or more application programs 714, and other program modules and program data. Examples of such application programs include computer program logic (e.g., computer program code/instructions) for implementing one or more of TP TC 122/302, TM 136/302, OS 130, application(s) 134, TP config 138/420, initializer 204/424, interface(s) 206, customizer 208, data collector 210/306, data generator 212/308/408, classifiers 214/310/428, determiner 216/316/434, reporter 218/322/440, handler 220/324/442, trainers 222/426, adapter 224/326/444, image classifier 312/430, motion classifier 314/432, final classifier 318/436, zone adjuster 320/438, sampler 410, filter 412, normalizer 414, extractor 416, behavior model(s) 446, classification adapter 448, touch zone adapter 450, flowcharts 500 and 600 (and/or any individual operations/steps thereof).

Storage 720 also stores data used and/or generated by operating system 712 and application programs 714 as application data 716. Examples of application data 716 include web pages, text, images, tables, sound files, video data, and other data. In examples, application data 716 is sent to and/or received from one or more network servers or other devices via one or more wired or wireless networks. Storage 720 is used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 702 through one or more input devices 730 and receives information from computing device 702 through one or more output devices 750. Input device(s) 730 includes one or more of touch screen 732, microphone 734, camera 736, physical keyboard 738, and/or trackball 740 and output device(s) 750 includes one or more of speaker 752 and display 754. Each of input device(s) 730 and output device(s) 750 are integral to computing device 702 (e.g., built into a housing of computing device 702) or are external to computing device 702 (e.g., communicatively coupled wired or wirelessly to computing device 702 via wired interface(s) 780 and/or wireless modem(s) 760). Further input devices 730 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 754 displays information, as well as operating as touch screen 732 by receiving user commands and/or other information (e.g., by touch, finger gestures, virtual keyboard, etc.) as a user interface. Any number of each type of input device(s) 730 and output device(s) 750 are present, including multiple microphones 734, multiple cameras 736, multiple speakers 752, and/or multiple displays 754.

In embodiments where GPU 742 is present, GPU 742 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 742 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 744 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 728. In an example, NPU 744 is configured for a data-driven parallel computing and is highly efficient at processing massive multimedia data such as videos and images and processing data for neural networks. NPU 744 is configured for efficient handling of AI-related tasks, such as speech recognition, background blurring in video calls, photo or video editing processes like object detection, etc.

In embodiments disclosed herein that implement ML models, NPU 744 can be utilized to execute such ML models, of which MLM 728 is an example. For instance, where applicable, MLM 728 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 744 is used to train MLM 728. To train MLM 728, training data is that includes input features (attributes) and their corresponding output labels/target values (e.g., for supervised learning) is collected. A training algorithm is a computational procedure that is used so that MLM 728 learns from the training data. Examples of training inputs for ML model training include user position, angle, gesture, time of day, location, user crypto, etc. Parameters/weights are internal settings of MLM 728 that are adjusted during training by the training algorithm to reduce a difference between predictions by MLM 728 and actual outcomes (e.g., output labels). In some examples, MLM 728 is set with initial values for the parameters/weights. A loss function measures a dissimilarity between predictions by MLM 728 and the target values, and the parameters/weights of MLM 728 are adjusted to minimize the loss function. The parameters/weights are iteratively adjusted by an optimization technique, such as gradient descent. In this manner, MLM 728 is generated through training by NPU 744 to be used to generate inferences based on received input feature sets for particular applications. MLM 728 is generated as a computer program or other type of algorithm configured to generate an output (e.g., a classification, a prediction/inference) based on received input features and is stored in the form of a file or other data structure.

In examples, such training of MLM 728 by NPU 744 is supervised or unsupervised. According to supervised learning, input objects (e.g., a vector of predictor variables) and a desired output value (e.g., a human-labeled supervisory signal) train MLM 728. The training data is processed, building a function that maps new data on expected output values. Example algorithms usable by NPU 744 to perform supervised training of MLM 728 in particular implementations include support-vector machines, linear regression, logistic regression, Naive Bayes, linear discriminant analysis, decision trees, K-nearest neighbor algorithm, neural networks, and similarity learning.

In an example of supervised learning where MLM 728 is an LLM, MLM 728 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 728 is trained to learn patterns from unlabeled data. For instance, in embodiments where MLM 728 implements unsupervised learning techniques, MLM 728 identifies one or more classifications or clusters to which an input belongs. During a training phase of MLM 728 according to unsupervised learning, MLM 728 tries to mimic the provided training data and uses the error in its mimicked output to correct itself (i.e., correct weights and biases). In further examples, NPU 744 perform unsupervised training of MLM 728 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 744 need not necessarily be present in all ML model embodiments. In embodiments where ML models are present, any one or more of processor 710, GPU 742, and/or NPU 744 can be present to train and/or execute MLM 728.

One or more wireless modems 760 can be coupled to antenna(s) (not shown) of computing device 702 and can support two-way communications between processor 710 and devices external to computing device 702 through network 704, as would be understood to persons skilled in the relevant art(s). Wireless modem 760 is shown generically and can include a cellular modem 766 for communicating with one or more cellular networks, such as a GSM network for data and voice communications within a single cellular network, between cellular networks, or between the mobile device and a public switched telephone network (PSTN). In examples, wireless modem 760 also or alternatively includes other radio-based modem types, such as a Bluetooth modem 764 (also referred to as a "Bluetooth device") and/or Wi-Fi modem 762 (also referred to as an "wireless adaptor"). Wi-Fi modem 762 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 764 is configured to communicate with another Bluetooth-capable device according to the Bluetooth short-range wireless technology standard(s) such as IEEE 802.15.1 and/or managed by the Bluetooth Special Interest Group (SIG).

Computing device 702 can further include power supply 782, LI receiver 784, accelerometer 786, and/or one or more wired interfaces 780. Example wired interfaces 780 include a USB port, IEEE 1394 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 780 of computing device 702 provide for wired connections between computing device 702 and network 704, or between computing device 702 and one or more devices/peripherals when such devices/peripherals are external to computing device 702 (e.g., a pointing device, display 754, speaker 752, camera 736, physical keyboard 738, etc.). Power supply 782 is configured to supply power to each of the components of computing device 702 and receives power from a battery internal to computing device 702, and/or from a power cord plugged into a power port of computing device 702 (e.g., a USB port, an A/C power port). LI receiver 784 is useable for location determination of computing device 702 and in examples includes a satellite navigation receiver such as a Global Positioning System (GPS) receiver and/or includes other type of location determiner configured to determine location of computing device 702 based on received information (e.g., using cell tower triangulation, etc.). Accelerometer 786, when present, is configured to determine an orientation of computing device 702.

Note that the illustrated components of computing device 702 are not required or all-inclusive, and fewer or greater numbers of components can be present as would be recognized by one skilled in the art. In examples, computing device 702 includes one or more of a gyroscope, barometer, proximity sensor, ambient light sensor, digital compass, etc. In an example, processor 710 and memory 756 are co-located in a same semiconductor device package, such as being included together in an integrated circuit chip, FPGA, or system-on-chip (SOC), optionally along with further components of computing device 702.

In embodiments, computing device 702 is configured to implement any of the above-described features of flowcharts herein. Computer program logic for performing any of the operations, steps, and/or functions described herein is stored in storage 720 and executed by processor 710.

In some embodiments, server infrastructure 770 is present in computing environment 700 and is communicatively coupled with computing device 702 via network 704. Server infrastructure 770, when present, is a network-accessible server set (e.g., a cloud-based environment or platform). As shown in FIG. 7, server infrastructure 770 includes clusters 772. Each of clusters 772 comprises a group of one or more compute nodes and/or a group of one or more storage nodes. For example, as shown in FIG. 7, cluster 772 includes nodes 774. Each of nodes 774 are accessible via network 704 (e.g., in a "cloud-based" embodiment) to build, deploy, and manage applications and services. In examples, any of nodes 774 is a storage node that comprises a plurality of physical storage disks, SSDs, and/or other physical storage devices that are accessible via network 704 and are configured to store data associated with the applications and services managed by nodes 774.

Each of nodes 774, as a compute node, comprises one or more server computers, server systems, and/or computing devices. For instance, a node 774 in accordance with an embodiment includes one or more of the components of computing device 702 disclosed herein. Each of nodes 774 is configured to execute one or more software applications (or "applications") and/or services and/or manage hardware resources (e.g., processors, memory, etc.), which are utilized by users (e.g., customers) of the network-accessible server set. In examples, as shown in FIG. 7, nodes 774 includes a node 746 that includes storage 748 and/or one or more of a processor 758 (e.g., similar to processor 710, GPU 742, and/or NPU 744 of computing device 702). Storage 748 stores application programs 776 and application data 778. Processor(s) 758 operates application programs 776 which access and/or generate related application data 778. In an implementation, nodes such as node 746 of nodes 774 operate or comprise one or more virtual machines, with each virtual machine emulating a system architecture (e.g., an operating system), in an isolated manner, upon which applications such as application programs 776 are executed.

In embodiments, one or more of clusters 772 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 772 are included in a datacenter in a distributed collection of datacenters. In embodiments, exemplary computing environment 700 comprises part of a cloud-based platform.

In an embodiment, computing device 702 accesses application programs 776 for execution in any manner, such as by a client application and/or a browser at computing device 702.

In an example, for purposes of network (e.g., cloud) backup and data security, computing device 702 additionally and/or alternatively synchronizes copies of application programs 714 and/or application data 716 to be stored at network-based server infrastructure 770 as application programs 776 and/or application data 778. In examples, operating system 712 and/or application programs 714 include a file hosting service client configured to synchronize applications and/or data stored in storage 720 at network-based server infrastructure 770.

In some embodiments, on-premises servers 792 are present in computing environment 700 and are communicatively coupled with computing device 702 via network 704. On-premises servers 792, when present, are hosted within an organization's infrastructure and, in many cases, physically onsite of a facility of that organization. On-premises servers 792 are controlled, administered, and maintained by IT (Information Technology) personnel of the organization or an IT partner to the organization. Application data 798 can be shared by on-premises servers 792 between computing devices of the organization, including computing device 702 (when part of an organization) through a local network of the organization, and/or through further networks accessible to the organization (including the Internet). Furthermore, in examples, on-premises servers 792 serve applications such as application programs 796 to the computing devices of the organization, including computing device 702. Accordingly, in examples, on-premises servers 792 include storage 794 (which includes one or more physical storage devices such as storage disks and/or SSDs) for storage of application programs 796 and application data 798 and include a processor 790 (e.g., similar to processor 710, GPU 742, and/or NPU 744 of computing device 702) for execution of application programs 796. In some embodiments, multiple processors 790 are present for execution of application programs 796 and/or for other purposes. In further examples, computing device 702 is configured to synchronize copies of application programs 714 and/or application data 716 for backup storage at on-premises servers 792 as application programs 796 and/or application data 798.

Embodiments described herein may be implemented in one or more of computing device 702, network-based server infrastructure 770, and on-premises servers 792. For example, in some embodiments, computing device 702 is used to implement systems, clients, or devices, or components/subcomponents thereof, disclosed elsewhere herein. In other embodiments, a combination of computing device 702, network-based server infrastructure 770, and/or on-premises servers 792 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 720. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules, or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 714) are stored in storage 720. Such computer programs can also be received via wired interface(s) 760 and/or wireless modem(s) 760 over network 704. Such computer programs, when executed or loaded by an application, enable computing device 702 to implement features of embodiments discussed herein. Accordingly, such computer programs represent controllers of the computing device 702.

Embodiments are also directed to computer program products comprising computer code or instructions stored on any computer-readable medium or computer-readable storage medium. Such computer program products include the physical storage of storage 720 as well as further physical storage types.

### IV. Additional Example Embodiments

A touchpad with dynamic touch zones, touch origin detection, multi-classification, and adaptive learning is disclosed herein. Active touch zones and inactive touch zones (e.g., evaluation zones, dead zones, or delay zones) are dynamically adjusted in response to touch events to filter out unintentional contact and misinterpretations of user intent. Dynamic adjustments are adapted to learned behaviors. Touch classification is assisted by touch-origin detection (e.g., starting inside or outside dead zone) to distinguish between intentional finger touches and unintentional palm contacts. Palm rejection is improved while maintaining responsiveness to intentional interaction by classifying touch events based on single frames and across multiple frames. For example, a touch event originating in an active (e.g., central) zone of the touchpad can be classified as intentional touch by a single frame classifier while a touch originating in a dead zone can be further evaluated by the motion classifier before determining the touch classification. Touch characteristics of still-frames (e.g., picture) and motion frames (e.g., video) include touch origin, direction, velocity, size, duration, and pressure. Accuracy is improved over time by adaptive algorithms that learn user behavior. Logic that determines touch classifications and touch zones is dynamically modified to adapt to user behavior. For example, resting a palm on the touchpad while moving the thumb can be learned as a multi-touch event where the user intends to simultaneously create non-user input (e.g., palm) and user input (e.g., thumb).

Computing systems are described herein. In an aspect, a computing device comprises a touch device (e.g., touchpad). The device includes touch and pressure sensors configured to detect touch events, touch location, and applied force. The device includes a data generator with a data collector configured to collect sensor data and a feature extractor/preprocessor configured to filter and normalize sensor data and generate a dataset for each frame of a touch event. The device includes a first classifier configured to generate a first classification (e.g., input, non-input) based at least on a first set of datasets representing a first set of frames (e.g., a single frame) of the touch event. The device includes a second classifier configured to generate a second classification based at least on a second set of datasets representing a second set of frames (e.g., a tunable number of multiple frames) of the touch event. In some examples, the second classification can also be based at least on the first classification. The device includes a determiner configured to determine a final classification of the touch event (e.g., as input/intentional touch or non-input/unintentional touch) and/or to adapt a touch zone of the touchpad based at least on one of the first classification or the second classification. The determination can be based at least on a touch point of origin for the touch event (e.g., in an active or inactive touch zone). The device can include a handler configured to interpret and respond to the classified user input. The device can include an adapter configured to learn user behavior based at least on touch events (e.g., and user responses to misinterpretations). The adapter can change the determiner to determine the final classification and/or the touch zone adaptation differently based at least on the learned user behavior.

In some examples, the determiner is further configured to adapt a touch zone of the touchpad based at least on one of the first classification or the second classification. For example, the determiner can be further configured to determine whether to delay classification of touch events that originate in an inactive/dead zone.

In some examples, the determiner is configured to shrink the touch zone in response to classification of the touch event as unintentional input (e.g., non-user input) and in response to the touch event originating outside the touch zone (e.g., in an inactive/dead zone) and to enlarge the touch zone in response to classification of the touch event as intentional input. For example, the determiner is configured to shrink the touch zone (e.g., expand the dead zone) in response to a touch event classified by at least one or the first or second classifications as an unintentional touch (e.g., palm). The determiner can be configured to (e.g., rapidly) expand the dead zone in response to the touch event being classified as unintentional touch in the dead zone (e.g., as soon as the system detects a probable palm contact along the peripheral region, to prevent further false activations). The determiner can be configured to (e.g., incrementally or slowly) shrink the expanded dead zone in response to classification of a user event as intentional touch (e.g., consistent finger-based swipes or taps).

In some examples, the determiner is configured to tailor (e.g., location, size, and/or implementation speed of) shrinkage of the touch zone (e.g., expansion of the dead zone) based at least on a touch point of origin for the touch event.

In some examples, the computing device further comprises an adapter configured to learn user behavior based at least on touch events (e.g., and user responses to misinterpretations of touch events). The adapter can be configured to change the determiner to determine the final classification differently based at least on the learned user behavior.

In some examples, the computing device further comprises an adapter configured to learn user behavior based at least on touch events (e.g., and user responses to misinterpretations of touch events). The adapter can be configured to change the determiner to change the determiner to adapt the touch zone differently based at least on the learned user behavior. For example, the determiner can be configured to expand a dead zone in response to a touch event originating in a dead zone. The adapter can change logic in the determiner to not expand the dead zone in response to a touch event originating in a dead zone after learning a user behavior.

In some examples, the first set of frames comprises a single frame and the second set of frames comprises multiple frames. For example, the single frame can comprise the first touch frame for touch origin classification, e.g., in an active zone or inactive zone/dead zone.

In some examples, the second classifier comprises a tunable number of multiple frames.

In some examples, the computing device further comprises a handler configured to interpret and effectuate a user intent for touch events classified as intentional touches.

Methods are described herein. In some examples, a method comprises generating a dataset for each frame of a touch event detected by the touchpad; generating a first classification of a first set of datasets representing a first set of frames of the touch event; generating a second classification of a second set of datasets representing a second set of frames of the touch event; and determining a final classification of the touch event based at least on one of the first classification or the second classification.

In some examples, the method further comprises adapting a touch zone of the touchpad based at least on one of the first classification or the second classification.

In some examples, the adaptation of the touch zone comprises shrinking the touch zone in response to classification of the touch event as unintentional input and in response to the touch event originating outside the touch zone; and enlarging the touch zone in response to classification of the touch event as intentional input.

In some examples, the shrinking of the touch zone is tailored to a touch point of origin for the touch event.

In some examples, the method further comprises learning user behavior based at least on touch events; and changing the determination of the final classification based at least on the learned user behavior.

In some examples, the method further comprises learning user behavior based at least on touch events; and changing the adaptation of the touch zone based at least on the learned user behavior.

In some examples, the first set of frames comprises a single frame; and the second set of frames comprises multiple frames.

In some examples, the second classification is also based at least on the first classification.

A computer-readable storage medium is described herein. The computer-readable storage medium has computer program logic recorded thereon that, executed by a processor circuit, causes the processor circuit to perform a method. The method may comprise, for example, any combination of operations described herein.

For example, a method may comprise generating a dataset for each frame of a touch event detected by the touchpad; generating a first classification of a first set of datasets representing a first set of frames of the touch event; generating a second classification based at least on the first classification and a second set of datasets representing a second set of frames of the touch event; and determining a final classification of the touch event based at least on the second classification.

In some examples, the method further comprises adapting a touch zone of the touchpad based at least on the second classification.

In some examples, the method further comprises learning user behavior based at least on touch events; and changing the determination of the final classification based at least on the learned user behavior; or changing the adaptation of the touch zone based at least on the learned user behavior.

A touchpad dynamically adjusts touch zones and scrutinizes touch events based on touch zone origin and/or other touch characteristics. Touch events undergo multiple classifications using different frame datasets. For example, a touch event originating in an active (e.g., central) zone of the touchpad can be classified as intentional touch by a single frame classifier while a touch originating in an inactive zone can be further evaluated by a motion classifier considering multiple data frames before determining the touch classification. Touch events originating in an inactive zone can result in expansion of the inactive zone while touch events originating in an active zone can result in contraction of one or more inactive zones. Classification and zoning logic are customizable based on learned user behaviors, thereby improving touch classification and touch zone accuracy for user touch events.

In an example, there is provided a computing device comprising a touchpad, the computing device comprising: a generator configured to generate a dataset for each frame of a touch event detected by the touchpad; a first classifier configured to generate a first classification of a first set of datasets representing a first set of frames of the touch event; a second classifier configured to generate a second classification of a second set of datasets representing a second set of frames of the touch event; and a determiner configured to determine a final classification of the touch event based at least on one of the first classification or the second classification.

In an example, the determiner is further configured to adapt a touch zone of the touchpad based at least on one of the first classification or the second classification.

In an example, the determiner is configured to: shrink the touch zone in response to classification of the touch event as unintentional input and in response to the touch event originating outside the touch zone; and enlarge the touch zone in response to classification of the touch event as intentional input.

In an example, the determiner is configured to tailor shrinkage of the touch zone based at least on a touch point of origin for the touch event.

In an example, the computing device further comprises an adapter configured to: learn user behavior based at least on touch events; and change the determiner to determine the final classification differently based at least on the learned user behavior.

In an example, the computing device further comprises an adapter configured to: learn user behavior based at least on touch events; and change the determiner to adapt the touch zone differently based at least on the learned user behavior.

In an example, the first set of frames comprises a single frame; and the second set of frames comprises multiple frames.

In an example, the second classifier comprises a tunable number of multiple frames.

In an example, the computing device further comprises a handler configured to interpret and effectuate a user intent for touch events classified as intentional touches.

In an example, there is provided a method comprising: generating a dataset for each frame of a touch event detected by a touchpad; generating a first classification of a first set of datasets representing a first set of frames of the touch event; generating a second classification of a second set of datasets representing a second set of frames of the touch event; and determining a final classification of the touch event based at least on one of the first classification or the second classification.

In an example, the method further comprises: adapting a touch zone of the touchpad based at least on one of the first classification or the second classification.

In an example, the adaptation of the touch zone comprises: shrinking the touch zone in response to classification of the touch event as unintentional input and in response to the touch event originating outside the touch zone; and enlarging the touch zone in response to classification of the touch event as intentional input.

In an example, the shrinking of the touch zone is tailored to a touch point of origin for the touch event.

In an example, the method further comprises: learning user behavior based at least on touch events; and changing the determination of the final classification based at least on the learned user behavior.

In an example, the method further comprises: learning user behavior based at least on touch events; and changing the adaptation of the touch zone based at least on the learned user behavior.

In an example, the first set of frames comprises a single frame; and the second set of frames comprises multiple frames.

In an example, the second classification is also based at least on the first classification.

In an example, there is provided a computer-readable storage medium having program instructions recorded thereon that, when executed by a processing circuit, perform a method comprising: generating a dataset for each frame of a touch event detected by the touchpad; generating a first classification of a first set of datasets representing a first set of frames of the touch event; generating a second classification based at least on the first classification and a second set of datasets representing a second set of frames of the touch event; and determining a final classification of the touch event based at least on the second classification.

In an example, the method further comprises: adapting a touch zone of the touchpad based at least on the second classification.

In an example, the method further comprises: learning user behavior based at least on touch events; and changing the determination of the final classification based at least on the learned user behavior; or changing the adaptation of the touch zone based at least on the learned user behavior.

### V. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, computing devices, servers, device management services, virtual machine provisioners, applications, and/or data stores and their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (e.g., or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (e.g., computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

## Claims

1. A computing device (100) comprising a touchpad (162), the computing device (100, 702) comprising:
a generator (212, 308, 408) configured to generate a dataset for each frame of a touch event detected by the touchpad (162);
a first classifier (214, 310, 428) configured to generate a first classification of a first set of datasets representing a first set of frames of the touch event;
a second classifier (214, 310, 428) configured to generate a second classification of a second set of datasets representing a second set of frames of the touch event; and
a determiner (216, 316, 434) configured to determine a final classification of the touch event based at least on one of the first classification or the second classification.

2. The computing device of claim 1, wherein the determiner is further configured to adapt a touch zone of the touchpad based at least on one of the first classification or the second classification.

3. The computing device of claim 2, wherein the determiner is configured to:
shrink the touch zone in response to classification of the touch event as unintentional input and in response to the touch event originating outside the touch zone; and
enlarge the touch zone in response to classification of the touch event as intentional input.

4. The computing device of claim 3,
wherein the determiner is configured to tailor shrinkage of the touch zone based at least on a touch point of origin for the touch event.

5. The computing device of claim 2, further comprising;
an adapter configured to:
learn user behavior based at least on touch events; and
change the determiner to determine the final classification differently based at least on the learned user behavior, or change the determiner to adapt the touch zone differently based at least on the learned user behavior.

6. The computing device of any of claims 1 to 5,
wherein the first set of frames comprises a single frame; and
wherein the second set of frames comprises multiple frames.

7. The computing device of claim 7,
wherein the second classifier comprises a tunable number of multiple frames.

8. The computing device of any of claims 1 to 7, further comprising:
a handler configured to interpret and effectuate a user intent for touch events classified as intentional touches.

9. A method (600) comprising:
generating (602) a dataset for each frame of a touch event detected by a touchpad;
generating (604) a first classification of a first set of datasets representing a first set of frames of the touch event;
generating (606) a second classification of a second set of datasets representing a second set of frames of the touch event; and
determining (608) a final classification of the touch event based at least on one of the first classification or the second classification.

10. The method of claim 9, further comprising:
adapting a touch zone of the touchpad based at least on one of the first classification or the second classification.

11. The method of claim 10, wherein the adaptation of the touch zone comprises:
shrinking the touch zone in response to classification of the touch event as unintentional input and in response to the touch event originating outside the touch zone; and
enlarging the touch zone in response to classification of the touch event as intentional input.

12. The method of claim 11,
wherein the shrinking of the touch zone is tailored to a touch point of origin for the touch event.

13. The method of claim 10, further comprising;
learning user behavior based at least on touch events; and
changing the determination of the final classification based at least on the learned user behavior or changing the adaptation of the touch zone based at least on the learned user behavior.

14. The method of any of claims 9 to 13,
wherein the first set of frames comprises a single frame; and
wherein the second set of frames comprises multiple frames;
and optionally, wherein the second classification is also based at least on the first classification.

15. A computer-readable storage medium (124, 128, 720, 748, 794) having program instructions (714, 776, 796) recorded thereon that, when executed by a processing circuit (122, 126, 304, 710, 758, 790), perform a method (600) comprising:
generating (602) a dataset for each frame of a touch event detected by the touchpad;
generating (604) a first classification of a first set of datasets representing a first set of frames of the touch event;
generating (606) a second classification based at least on the first classification and a second set of datasets representing a second set of frames of the touch event; and
determining (608) a final classification of the touch event based at least on the second classification.
